# EUROPÄISCHE PATENTSCHRIFT

(11) **EP 3 137 795 B1**
(45) Veröffentlichungstag und Bekanntmachung des Hinweises auf die Patenterteilung: **15.01.2020**
(21) Anmeldenummer: 15717108.3
(22) Anmeldetag: 31.03.2015
(51) Int. Cl.: F16K 11/052, F16K 1/20

(54) **VORRICHTUNG ZUR STEUERUNG ODER REGELUNG DER DURCHFLUSSMENGE UND/ODER DURCHFLUSSRICHTUNG VON FLUIDEN**
DEVICE FOR CONTROLLING OR REGULATING THE FLOW RATE AND/OR FLOW DIRECTION OF FLUIDS
DISPOSITIF DE COMMANDE OU DE RÉGULATION DU DÉBIT ET/OU DE LA DIRECTION D'ÉCOULEMENT DE FLUIDES

(30) Priorität: 29.04.2014 DE 102014106010
(43) Veröffentlichungstag der Anmeldung: 08.03.2017
(73) Patentinhaber: SIG Technology AG, 8212 Neuhausen (CH)
(72) Erfinder: VON BIRGELEN, Bernd, 52525 Waldfeucht (DE); GÖTTGENS, Leonhard Sylvester, 52076 Aachen (DE)
(74) Vertreter: Cohausz & Florack
(86) Internationale Anmeldenummer: PCT/EP2015/056998
(87) Internationale Veröffentlichungsnummer: WO 2015/165676

(56) Entgegenhaltungen:
- DE-A1-102010 018 674
- DE-U1- 9 003 542
- US-A- 3 173 356
- US-A- 5 908 047

## Beschreibung

Die Erfindung betrifft eine Vorrichtung zur Steuerung oder Regelung der Durchflussmenge und/oder Durchflussrichtung von Fluiden, umfassend: ein Gehäuse mit wenigstens zwei Einlässen und/oder Auslässen, wenigstens einen Arm, der innerhalb des Gehäuses beweglich angeordnet ist, und wenigstens ein Verschlusselement, das innerhalb des Gehäuses angeordnet ist und beweglich mit dem Arm verbunden ist, und ein vorgespanntes Federelement, das zwischen dem Arm und dem Verschlusselement angeordnet ist, wobei der Arm und das damit verbundene Verschlusselement derart angeordnet und miteinander verbunden sind, dass durch das Verschlusselement wenigstens ein Einlass und/oder Auslass absperrbar ist, und wobei das Verschlusselement und/oder wenigstens ein Einlass und/oder Auslass eine gekrümmte Dichtfläche zur Abdichtung der Einlässe und/oder Auslässe aufweist.

Die Erfindung betrifft zudem die Verwendung einer derartigen Vorrichtung bei der Sterilisation von Lebensmittelverpackungen und/oder deren Füllgut.

Strömende Fluide - also Gase oder Flüssigkeiten - können auf unterschiedliche Weise beeinflusst werden. Das Ziel dieser Beeinflussung kann beispielsweise in einer Steuerung oder Regelung der Durchflussmenge oder der Durchflussrichtung der Fluide liegen. Hierzu sind aus dem Stand der Technik zahlreiche Vorrichtungen bekannt, die häufig als Ventile bezeichnet werden. Eine Gruppe der Ventile stellen Wegeventile oder Mehrwegeventile dar, die sich dadurch auszeichnen, dass sie drei oder mehr Fluidanschlüsse aufweisen und schaltbar sind. Auf diese Weise kann beispielsweise ein Einlass je nach Bedarf mit einem ersten Auslass oder mit einem zweiten Auslass verbunden werden und somit die Strömung in unterschiedliche Richtungen geleitet werden. Zudem können beide Auslässe geschlossen werden, so dass die Strömung vollständig unterbrochen wird. Neben der vollständig geöffneten und der vollständig geschlossenen Stellung können zur Einstellung der Durchflussmenge auch Zwischenstellungen eingenommen werden, bei denen die Auslässe nur teilweise geöffnet sind.

Eine besondere Herausforderung bei Ventilen liegt traditionell darin, die Auslässe besonders zuverlässig absperren zu können, um die Fluidströmung vollständig zu unterbinden. Hierzu ist es erforderlich, einen Linien- oder Flächenkontakt zwischen zwei relativ zueinander beweglichen Bauteilen zu erzeugen, der die Fluidströmung zuverlässig unterbricht. Bei diesen Bauteilen kann es sich beispielsweise um ein Verschlusselement handeln, dass auf einen Ventilsitz gepresst werden kann und von dem Ventilsitz wieder abgehoben werden kann.

Um eine besonders gut abdichtenden Verbindung zwischen Verschlusselement und Ventilsitz zu erreichen, sind Dichtflächen aus Gummi bekannt, die an dem Verschlusselement oder dem Ventilsitz vorgesehen sind. Durch das Gummi können Unebenheiten an den Kontaktflächen ausgeglichen werden, so dass eine besonders gute Abdichtung erreicht wird. Gleichwohl sind Dichtflächen aus Gummi bei vielen Anwendungen nicht einsetzbar. Beispielsweise können Dichtflächen aus Gummi bei sehr hohen Drücken oder sehr hohen Temperaturen beschädigt werden. Zudem erfüllen Dichtflächen aus Gummi nicht die strengen hygienischen Anforderungen, die beispielsweise bei der Abfüllung von Lebensmitteln an die verwendeten Anlagen gestellt werden.

Aus diesem Grund werden insbesondere bei hohen hygienischen Anforderungen Ventile mit metallischen Dichtflächen bevorzugt, da sich diese besonders gut reinigen lassen und eine höhere Beständigkeit gegenüber Reinigungsmitteln, Sterilisationsmitteln sowie den abzufüllenden Lebensmitteln haben. Eine Herausforderung bei Verschlusselementen mit metallischen Dichtflächen liegt jedoch darin, eine sichere Abdichtung zu erreichen. Denn aufgrund der sehr hohen Steifigkeit und der damit verbundenen sehr geringen Elastizität können sich metallische Dichtflächen kaum an die ihnen zugeordneten Flächen der Ventilsitze anpassen und zwangsläufig vorhandene Fertigungstoleranzen oder Ausrichtungsfehler somit auch nur sehr begrenzt ausgleichen. Neben Fertigungstoleranzen sind auch geringe Verformungen innerhalb des Ventils auszugleichen, die beispielsweise aufgrund von sehr hohen mechanischen oder thermischen Belastungen entstehen. Um diesen Problemen zu begegnen wurde bereits vorgeschlagen, Ventile einzusetzen, bei denen die Verschlusselemente zwar metallische Dichtflächen aufweisen, die Verschlusselemente jedoch innerhalb des Ventils schwenkbar gelagert sind.

Eine Vorrichtung gemäß den oberbegrifflichen Merkmalen von Anspruch 1 ist aus DE-A-10 2010 018 674 bekannt.

Ein weiteres Drei-Wege-Ventil ist beispielsweise aus der JP 7-224633 A bekannt (auch in Fig. 6 der US 5,908,047 als Stand der Technik dargestellt). Es handelt sich um ein Ventil für die Abgasanlage eines Verbrennungsmotors. Das Ventil umfasst ein Gehäuse mit einem Einlass und zwei Auslässen. In dem Gehäuse befindet sich ein schwenkbar gelagerter Arm, an dessen Ende zwei Verschlusselemente mit kugelförmigen Dichtflächen befestigt sind. Je nach Stellung des Armes verschließt das erste Verschlusselement den ersten Auslass oder das zweite Verschlusselement verschließt den zweiten Auslass. Die Befestigung der Verschlusselemente an dem Arm erfolgt über ein Drehgelenk, so dass die Verschlusselemente um einen geringen Winkel gegenüber dem Arm verschwenkt werden können.

Ein Nachteil an dem aus der JP 7-224633 A bekannten Ventil liegt darin, dass das Drehgelenk, welches die Verschlusselemente mit dem Arm verbindet, nur einen Freiheitsgrad der Bewegung aufweist; das Drehgelenk erlaubt also nur eine Schwenkung der Verschlusselemente um eine feststehende Drehachse. Dieser eingeschränkten Beweglichkeit soll nach der Lehre der JP 7-224633 A zwar dadurch begegnet werden, dass der Arm durch ein Drehschubgelenk mit dem Gehäuse verbunden ist und somit nicht nur geschwenkt, sondern auch in der Höhe verschoben werden kann. Auch diese konstruktive Maßnahme kann die beschriebenen Nachteile jedoch nicht vollständig ausgleichen, denn trotz der Höhenverstellung können die Verschlusselemente weiterhin nur um eine Achse verschwenkt werden; eine Schwenkung um eine zweite, senkrecht auf der erste Achse stehenden Achse ist hingegen nicht vorgesehen, so dass keine Möglichkeit besteht, so genannte "Winkelfehler" ausgleichen zu können. Zudem erlaubt das Drehgelenk keine lineare Bewegung, also keine Abstandsänderung zwischen den Verschlusselementen und dem Arm. Schließlich hat die vorgeschlagene Lösung den Nachteil, dass die eingesetzten Gelenke (Drehgelenk, Drehschubgelenk) keine gezielte Ausrichtung der Verschlusselemente erlauben. Insbesondere besteht beim Umschwenken des Armes die Gefahr, dass die Verschlusselemente unter der Einwirkung der Gewichtskraft und/oder der Fluidströmung in eine unerwünschte Stellung gebracht werden, die das anschließende Aufsetzen der Verschlusselemente auf andere abzudichtende Auslässe erschwert.

Vor diesem Hintergrund liegt der Erfindung die Aufgabe zugrunde, die eingangs genannte und zuvor näher dargestellte Vorrichtung derart auszugestalten und weiterzubilden, dass eine hohe Beweglichkeit des Verschlusselements im belasteten Zustand bei gleichzeitiger definierter Ausrichtung des Verschlusselements im entlasteten Zustand und bei gleichzeitig verbesserter Abdichtung erreicht wird.

Diese Aufgabe wird durch eine Vorrichtung gemäß den Merkmalen von Patentanspruch 1 gelöst.

Die erfindungsgemäße Vorrichtung zeichnet sich zunächst durch ein Gehäuse aus, das wenigstens zwei Einlässe und/oder Auslässe aufweist. Durch die Einlässe kann ein Fluid in das Gehäuse einströmen, durch die Auslässe kann es wieder aus dem Gehäuse heraus strömen. Einlässe und Auslässe können auch allgemein als "Anschlüsse" bezeichnet werden, so dass es sich um ein Gehäuse mit wenigstens zwei Anschlüssen handelt. Eine Vorrichtung mit zwei Anschlüssen - beispielsweise einem Einlass und einem Auslass - kann als einfaches Absperrventil eingesetzt werden. Eine Vorrichtung mit wenigstens drei Anschlüssen - beispielsweise einem Einlass und zwei Auslässen - kann hingegen als schaltbares Mehrwegeventil eingesetzt werden. Aus diesem Grund werden Vorrichtungen bevorzugt, die wenigstens drei Einlässe und/oder Auslässe aufweisen. Vorzugsweise ist das Gehäuse aus Metall, insbesondere aus Edelstahl hergestellt. Weiterhin ist wenigstens ein Arm vorgesehen, der beweglich innerhalb des Gehäuses angeordnet ist und insbesondere beweglich mit dem Gehäuse verbunden sein kann. Der Arm kann direkt oder indirekt, also über weitere Bauteile, mit dem Gehäuse verbunden sein. Auch der Arm ist vorzugsweise aus Metall, insbesondere aus Edelstahl hergestellt. Zudem ist wenigstens ein Verschlusselement vorgesehen, das innerhalb des Gehäuses angeordnet ist und beweglich mit dem Arm verbunden ist. Auch die Verbindung zwischen dem Verschlusselement und dem Arm kann direkt oder indirekt, beispielsweise über ein Gelenk, erfolgen. Zur Herstellung des Verschlusselements wird ebenfalls bevorzugt Metall, insbesondere Edelstahl verwendet. Es ist vorgesehen, dass der Arm und das damit verbundene Verschlusselement derart angeordnet und miteinander verbunden sind, dass durch das Verschlusselement wenigstens ein Einlass und/oder Auslass absperrbar ist. Diese Anforderung wird durch eine entsprechende Dimensionierung, Anordnung und Verbindung der einzelnen Bauteile erreicht. Um eine Selbstzentrierung des Verschlusselements beim Einführen in den abzusperrenden Einlass bzw. Auslass zu erreichen, ist schließlich vorgesehen, dass das Verschlusselement und/oder wenigstens ein Einlass und/oder Auslass - insbesondere der durch dieses Verschlusselement abzusperrende Einlass bzw. Auslass - eine gekrümmte Dichtfläche zur Abdichtung der Einlässe und/oder Auslässe aufweist.

Indem erfindungsgemäß vorgeschlagen wird, dass ein vorgespanntes Federelement zwischen dem Arm und dem Verschlusselement angeordnet ist, werden mehrere Vorteile erreicht: Zunächst ermöglicht das Federelement aufgrund seiner Vorspannung eine Ausrichtung und Zentrierung des beweglich gelagerten Verschlusselements in einer definierten "Soll-Stellung". Diese Ausgangsstellung verlässt das Verschlusselement nur unter Verformung der Federelemente, was einen bestimmten Krafteinsatz erfordert. Sobald die auf das Verschlusselement wirkende Kraft geringer wird, nimmt das Federelement wieder seine ursprüngliche Stellung ein und führt das Verschlusselement wieder zurück in seine Ausgangsstellung. Durch die beschriebene Ausrichtung des Verschlusselements können schnellere und präzisere Schaltvorgänge erreicht werden. Denn es besteht aufgrund der automatischen Ausrichtung nicht die Gefahr, dass das Verschlusselement in der Umschaltphase unter der Einwirkung der Gewichtskraft und/oder der Fluidströmung in eine unerwünschte Stellung gebracht wird, die das anschließende Aufsetzen des Verschlusselements auf den abzudichtenden Einlass bzw. Auslass erschwert. Gleichwohl bleibt jedenfalls bei ausreichend hoher Krafteinwirkung - wie sie beispielsweise beim Andrücken des Verschlusselements auf den abzudichtenden Einlass bzw. Auslass auftritt - eine hohe Beweglichkeit des Verschlusselements erhalten, was einen optimalen Ausgleich von geometrischen Toleranzen erlaubt.

Ein weiterer Vorteil der vorgespannten Federelemente liegt darin, dass - bei entsprechender Lagerung des Verschlusselements - die Funktion eines Sicherheitsventils bzw. Überdruckventils gewährleistet werden kann. Denn bei Überschreiten eines zulässigen Ansprechdruckes in dem abzudichtenden Einlass bzw. Auslass erlauben die Federelemente ein leichtes Öffnen des Verschlusselements, wodurch Fluid aus dem abzudichtenden Einlass bzw. Auslass abgeleitet wird und der dort herrschende Druck verringert wird. Auf diese Weise können die an die Vorrichtung angeschlossenen Anlagen vor einem unzulässigen Druckanstieg und einer damit einhergehenden Beschädigung geschützt werden. Sobald wieder ein bestimmtes Druckniveau unterschritten wird, drückt das Federelement das Verschlusselement wieder fest auf den abzudichtenden Einlass bzw. Auslass und dichtet diesen ab. Vorzugsweise wird das Federelement zwischen dem Arm und dem Verschlusselement lediglich eingespannt oder eingeklemmt (kraftschlüssige Verbindung), ohne mit einem dieser Bauteile verschweißt zu sein. Dies hat den Vorteil, dass das Federelement auf dem Arm und/oder auf dem Verschlusselement abgleiten kann. Alternativ hierzu kann das Federelement mit einem der beiden benachbarten Bauteile verschweißt sein (stoffschlüssige Verbindung) und an dem jeweils anderen der beiden benachbarten Bauteile abgleiten. Durch eine ringförmige Ausbildung des Federelements kann das Federelement beispielsweise um eine schmale Stelle des Verschlusselements herumgeführt werden, so dass auch ohne Verschweißungen eine verliersichere Lagerung gewährleistet ist (formschlüssige Verbindung). Bei einer ringförmigen Ausbildung des Federelementes sind vorzugsweise mehrere radial nach außen gerichtete Schenkel an dem Federelement vorgesehen. Auch das Federelement ist vorzugsweise aus Metall, insbesondere aus Edelstahl hergestellt. Alternativ zu einer Herstellung aus Metall können einige oder alle Teile der Vorrichtung auch durch bestimmte Kunststoffe hergestellt werden, die die hygienischen Anforderungen der Lebensmittelindustrie erfüllen (z.B. PEEK = Polyetheretherketon).

Eine Ausgestaltung der Erfindung sieht vor, dass der Arm wenigstens ein Durchgangsloch aufweist, durch das zwei Verschlusselemente, die auf gegenüberliegenden Seiten des Armes angeordnet sind, miteinander verbunden sind. Indem in dem Arm ein Durchgangsloch oder eine Durchgangsbohrung vorgesehen ist, kann eine besonders einfache und zuverlässige Verbindung zwischen dem Verschlusselement und dem Arm erzeugt werden: Es werden zwei gegenüberliegend angeordnete Verschlusselemente durch das in dem Arm vorgesehene Durchgangsloch hindurch miteinander verbunden, wodurch gleichzeitig eine Verbindung der beiden Verschlusselemente mit dem Arm erreicht wird. Bevorzugt wird aus Wartungsgründen eine lösbare Verbindung; die beiden gegenüberliegenden Verschlusselemente können beispielsweise miteinander verschraubt sein. Hierzu kann in beiden Verschlusselementen ein Innengewinde vorgesehen sein, so dass beide Verschlusselemente durch einen Gewindestift mit Außengewinde zusammengehalten werden können. Zur Ausbildung der Verbindung wird der Gewindestift in eines der beiden Verschlusselemente geschraubt und das Federelement wird aufgesteckt. Dieses Verschlusselement kann dann mit dem Gewindestift voran durch das Durchgangsloch des Armes gesteckt werden. Von der anderen Seite kann schließlich ebenfalls ein Federelement aufgesteckt werden und das zweite Verschlusselement auf den Gewindestift geschraubt werden, so dass beide Verschlusselemente fest miteinander verbunden sind. Es kann vorgesehen sein, dass der zwischen den beiden Verschlusselementen entstehende Fügespalt mit einer Dichtung versehen wird und/oder verklebt wird. Das Durchgangsloch kann einen kreisförmigen Querschnitt aufweisen oder eine andere geeignete Form haben (z.B. "Langloch", "Kleeblatt", "Oval").

Zu dieser Ausgestaltung der Erfindung wird weiter vorschlagen, dass das Durchgangsloch einen Durchmesser aufweist, der größer ist als der Mindestdurchmesser, den die beiden miteinander verbundenen Verschlusselemente aufweisen. Vorzugsweise weisen beide Verschlusselemente ihren kleinsten Durchmesser an derjenigen Stelle auf, die dem jeweils anderen Verschlusselement zugeordnet ist. Zudem ist der kleinste Durchmesser bei beiden Verschlusselementen vorzugsweise gleich groß, so dass beim Zusammenfügen der beiden Verschlusselemente der Mindestdurchmesser im Bereich der Kontaktflächen der beiden Verschlusselemente entsteht. Indem der Mindestdurchmesser kleiner ist als der Durchmesser des Durchgangsloches, entsteht keine Presspassung, sondern eine Spielpassung. Dies hat zur Folge, dass die beiden miteinander verbundenen Verschlusselemente relativ zu dem Arm beweglich gelagert sind. Insbesondere können die Verschlusselemente sowohl eine lineare Bewegung als auch eine Schwenkbewegung relativ zu dem Arm ausführen, so dass eine besonders flexible Beweglichkeit erreicht wird. Durch das bereits zuvor beschriebene vorgespannte Federelement wird gleichwohl erreicht, dass die beiden Verschlusselemente im entlasteten Zustand nicht unkontrolliert in dem Durchgangsloch hin- und herrutschen, sondern eine definierte Ausgangsstellung einnehmen. Der Mindestdurchmesser der Verschlusselemente kann im Bereich zwischen 5 mm und 40 mm liegen; der Durchmesser des Durchgangsloches kann im Bereich zwischen 6 mm und 45 mm liegen. Sofern das Durchgangsloch keinen kreisförmigen Querschnitt aufweist, bezeichnet der Durchmesser des Durchgangsloches die minimale Weite seiner Öffnung an derjenigen Stelle, an der die Verschlusselemente durch das Durchgangsloch geführt werden.

Zu diesen beiden Ausgestaltungen der Erfindung ist weiterhin vorgesehen, dass das Durchgangsloch einen Durchmesser aufweist, der kleiner ist als der Maximaldurchmesser, den die beiden miteinander verbundenen Verschlusselemente aufweisen. Indem die Maximaldurchmesser der beiden Verschlusselemente größer ausgestaltet sind, als der Durchmesser des Durchgangsloches, wird erreicht, dass die beiden miteinander verbundenen Verschlusselemente nicht aus dem Durchgangsloch herausrutschen können und somit verliersicher mit dem Arm verbunden sind. Der Maximaldurchmesser der Verschlusselemente kann im Bereich zwischen 30 mm und 300 mm liegen. Sofern das Durchgangsloch keinen kreisförmigen Querschnitt aufweist, bezeichnet der Durchmesser des Durchgangsloches die minimale Weite seiner Öffnung an derjenigen Stelle, an der die Verschlusselemente durch das Durchgangsloch geführt werden.

Gemäß einer weiteren Ausbildung der Erfindung ist vorgesehen, dass das Verschlusselement über ein Kugelgelenk beweglich mit dem Arm verbunden ist. Durch ein Kugelgelenk wird eine Beweglichkeit des Verschlusselements mit drei Freiheitsgraden erreicht, nämlich eine Rotation um die Symmetrieachse und eine Schwenkbewegung um zwei senkrecht auf der Rotationsachse stehenden Achsen. Eine Lagerung durch ein Kugelgelenk hat gegenüber der zuvor beschriebenen Lösung den Vorteil, dass zur Lagerung kein zweites, gegenüberliegend angeordnetes Verschlusselement vorhanden sein muss. Denn der Gelenkkopf kann an dem Verschlusselement vorgesehen sein und die Gelenkpfanne kann an dem Arm vorgesehen sein (oder umgekehrt). An dem Gelenkkopf und/oder an der Gelenkpfanne können Spülrillen vorgesehen sein, durch die ein Reinigungs- oder Sterilisationsmedium geleitet werden kann. Die Lagerung durch Kugelgelenke bietet sich daher insbesondere bei Verschlusselementen an, die nicht paarweise gegenüberliegend des Armes montiert werden, sondern einzeln mit dem Arm verbunden werden. Auch ein Kugelgelenk kann in idealer Weise durch das zuvor beschriebene Federelement ergänzt werden, so dass das Verschlusselement im entlasteten Zustand durch das Federelement stets in eine definierte Ausgangsstellung zurückgeführt wird. Die fehlende Möglichkeit einer linearen Bewegung von Kugelgelenken kann beispielsweise durch eine entsprechende Lagerung des Armes ausgeglichen werden.

Eine weitere Lehre der Erfindung schlägt vor, dass der Arm um eine Drehachse schwenkbar ist, die relativ zu dem Gehäuse eine feste Lage aufweist. Eine Drehachse mit fester Lage hat den Vorteil, dass in dem Gehäuse - und ggf. dem Gehäusedeckel - feste Lagerpunkte für die Drehachse vorgesehen werden können. Dies ist gegenüber einer Drehachse mit veränderlicher Lage wesentlich einfacher herstellbar und hat zudem hygienische Vorteile. Gleichwohl kann auch durch eine feste Drehachse bei entsprechender Anordnung der Drehachse und der Einlässe bzw. Auslässe in dem Gehäuse erreicht werden, dass durch die Verschlusselemente eines Armes mehrere unterschiedliche Einlässe bzw. Auslässe durch die Verschlusselemente dieses Armes erreichbar und somit verschließbar sind. Sofern mehrere Arme vorhanden sind, kann vorgesehen sein, dass jeder Arm um eine Drehachse schwenkbar ist, die relativ zu dem Gehäuse eine feste Lage aufweist.

Gemäß der Erfindung ist vorgesehen, dass das Verschlusselement und/oder wenigstens ein Einlass und/oder Auslass eine konvex gekrümmte Dichtfläche aufweist. Durch eine konvexe, also nach außen gewölbte, Dichtfläche wird erreicht, dass die Dichtflächen besonders sicher die ihnen zugeordneten Flächen an den Ventilsitzen erreichen können. Zudem kann durch konvexe Dichtflächen selbst dann ein Linienkontakt mit den umlaufenden Kanten an den Ventilsitzen erreicht werden, wenn an diesen Kanten Fasen vorhanden sind. Dies ermöglicht eine zuverlässige Abdichtung der Einlässe bzw. Auslässe. Sofern mehrere Verschlusselemente vorhanden sind, kann vorgesehen sein, dass jedes Verschlusselement eine konvex gekrümmte Dichtfläche aufweist. Die gleichen Vorteile ergeben sich, wenn die konvex gekrümmte Dichtfläche nicht an dem Verschlusselement, sondern an dem abzudichtenden Einlass bzw. Auslass vorhanden ist.

Gemäß der Erfindung weist das Verschlusselement und/oder wenigstens ein Einlass und/oder Auslass eine kugelförmige Dichtfläche auf. Die Dichtflächen müssen nicht zwingend vollständig kugelförmig sein oder gar die Form einer Vollkugel aufweisen; es ist stattdessen ausreichend, wenn die Dichtflächen in dem Bereich, der mit den Ventilsitzen in Kontakt kommen kann, kugelförmig ausgebildet sind. Eine kugelförmige Dichtfläche hat den Vorteil, dass die Verschlusselemente auch in einer geneigten bzw. geschwenkten Position eine optimale Abdichtung erreichen, da sich die Querschnittsfläche einer Kugel - und somit auch die Form der Kontaktlinie zwischen Verschlusselement und Ventilsitz - niemals ändert, sondern immer kreisförmig ist. Bei einer kegel(mantel)förmigen Dichtfläche wären die Querschnittsflächen bei einem geneigten Verschlusselement hingegen elliptisch. Sofern mehrere Verschlusselemente vorhanden sind, kann vorgesehen sein, dass jedes Verschlusselement eine kugelförmige Dichtfläche aufweist. Die gleichen Vorteile ergeben sich, wenn die kugelförmig gekrümmte Dichtfläche nicht an dem Verschlusselement, sondern an dem abzudichtenden Einlass bzw. Auslass vorhanden ist.

Eine weitere Ausbildung der Erfindung sieht vor, dass die Einlässe und/oder Auslässe an ihrem in dem Gehäuse angeordneten Ende kreisförmig ausgebildet sind. Kreisförmige Enden der Einlässe bzw. Auslässe haben aufgrund ihrer Symmetrie den Vorteil, dass entsprechend geformte Verschlusselemente die Einlässe bzw. Auslässe auch in einer gegenüber der Ausgangsstellung verdrehten Stellung sicher abdichten können. Besonders vorteilhaft ist der Einsatz von Einlässen bzw. Auslässen mit kreisförmigem Ende bei Verschlusselementen mit kugelförmigen Dichtflächen. Denn jede beliebige Schnittebene einer Kugel ist kreisförmig, so dass ein Verschlusselement mit kugelförmigen Dichtflächen nicht nur in einer verdrehten Stellung, sondern sogar in einer verschwenkten Stellung eine zuverlässige Abdichtung eines Einlasses bzw. Auslasses mit kreisförmigem Ende erreichen kann. Kreisförmige Einlässe bzw. Auslässe können sehr einfach erzeugt werden, indem Rohre mit zylindrischem Querschnitt gerade - also rechtwinklig zu ihrer Längsachse - abgeschnitten werden.

Nach einer weiteren Lehre der Erfindung ist vorgesehen, dass der Arm wenigstens zwei beweglich miteinander verbundene Teile umfasst, wobei der erste Teil um eine Drehachse schwenkbar ist, die relativ zu dem Gehäuse eine feste Lage aufweist, und wobei der zweite Teil und jeder weitere Teil um wenigstens eine Drehachse schwenkbar ist, die relativ zu dem benachbarten Teil eine feste Lage aufweist. Durch mehrteilige bzw. mehrgliedrige Arme können die an den Armen befestigten Verschlusselemente besonders variabel bewegt werden, so dass mit derartigen Armen bei einer gleichen Anzahl von Verschlusselementen im Vergleich zu einteiligen Armen häufig eine erhöhte Anzahl von Schaltstellungen erreicht werden kann. Vorzugsweise sind die unterschiedlichen Teile des Armes durch Gelenke, insbesondere durch Drehgelenke miteinander verbunden. Sofern mehrere Arme vorhanden sind, kann vorgesehen sein, dass jeder Arm auf die zuvor beschriebene Weise mehrteilig ausgestaltet ist.

Zu dieser Lehre wird weiter vorgeschlagen, dass wenigstens ein Verschlusselement beweglich mit dem ersten Teil des Armes verbunden ist und/oder dass wenigstens ein Verschlusselement beweglich mit dem zweiten Teil und/oder jedem weiteren Teil des Armes verbunden ist. Indem die Verschlusselemente an jedem beliebigen Teil des Armes befestigt sein können, wird die Variabilität der Bewegung und somit die Anzahl der ausführbaren Schaltstellungen weiter erhöht. Besonders variabel kann der Arm eingesetzt werden, wenn nicht nur an einem, sondern an mehreren Teilen des Armes Verschlusselemente befestigt sind. Es können auch zwei oder mehr Verschlusselemente an demselben Teil des Armes befestigt sein, wobei die zuvor beschriebene gegenüberliegende Anordnung von jeweils zwei Verschlusselementen aufgrund der Befestigungsmöglichkeit mittels Durchgangsloch bevorzugt wird. Sofern mehrere Arme vorhanden sind, kann vorgesehen sein, dass jeder Arm auf die zuvor beschriebene Weise ausgestaltet ist.

Eine weitere Ausgestaltung der Erfindung ist gekennzeichnet durch einen Aktuator zur Bewegung des Armes, wobei der Aktuator außerhalb des Gehäuses angeordnet ist. Durch einen Aktuator, teilweise auch Aktor genannt, kann auf einfache Weise eine Bewegung, insbesondere Drehbewegung des Armes erreicht werden. Hierzu kommen sowohl pneumatische, als auch hydraulische oder elektrische Aktuatoren in Frage. Die Anordnung außerhalb des Gehäuses hat den Vorteil, dass der Aktuator leicht ausgetauscht werden kann und dass der Aktuator das durch das Gehäuse strömende Fluid nicht beeinflusst oder - etwa durch Öl oder Fett - verunreinigt. Sofern mehrere Arme vorhanden sind, kann vorgesehen sein, dass jeder Arm durch einen Aktuator bewegt wird. In diesem Fall kann jedem Arm ein eigener Aktuator zugeordnet sein oder mehrere Arme können - beispielsweise über eine geeignete Mechanik - durch denselben Aktuator bewegt werden.

Zu dieser Ausgestaltung wird vorgeschlagen, dass der Aktuator mechanisch mit dem Arm verbunden ist. Eine mechanische Verbindung hat den Vorteil einer besonders zuverlässigen und präzisen Kraftübertragung. Die Verbindung kann beispielsweise dadurch realisiert werden, dass in dem Gehäuse eine abgedichtete Durchführung für den Arm oder den Aktuator oder ein Verbindungselement vorgesehen ist.

Alternativ hierzu wird zu dieser Ausgestaltung vorgeschlagen, dass der Aktuator berührungslos, insbesondere magnetisch mit dem Arm verkoppelt ist. Durch eine berührungslose Verbindung, insbesondere eine "Magnetkupplung", kann auf eine Durchführung mechanischer Bauteile durch das Gehäuse verzichtet werden und somit auch bei hohen Drücken und schwierig abzudichtenden Fluiden (z.B. Gasen) eine gute Abdichtung sichergestellt werden.

In weiterer Ausbildung der Erfindung ist vorgesehen, dass mehrere Arme über eine gemeinsame Linearführung oder über jeweils eine separate Linearführung beweglich mit dem Gehäuse verbunden sind. Vorzugsweise ist die gemeinsame Linearführung zentral in dem Gehäuse angeordnet und starr mit dem Gehäuse verbunden, während die Arme beweglich mit der gemeinsamen Linearführung verbunden sind. Die Lagerung mehrerer Arme durch eine gemeinsame Linearführung hat den Vorteil, dass nur eine Verbindung mit dem Gehäuse vorgesehen werden muss. Die Verwendung mehrerer separater Linearführungen hat hingegen den Vorteil, dass jedes der Lager besonders dicht an dem abzudichtenden Einlass bzw. Auslass - also außen - angeordnet sein kann und daher den Arm besonders genau führen kann. Durch die Möglichkeit einer linearen Beweglichkeit der Arme wird zudem eine besonders gleichmäße Steuerung der Durchflussmenge möglich, da der Spalt, welcher sich zwischen dem Verschlusselement und dem abzudichtenden Einlass bzw. Auslass bildet, an jeder Stelle gleich groß ist. Vorzugsweise sind die Arme in radialer Richtung relativ zu der gemeinsamen Linearführung oder zu den separaten Linearführungen verschiebbar. Die radiale Verschiebbarkeit kann beispielsweise dadurch erreicht werden, dass in den Linearführungen radiale Bohrungen vorgesehen sind, in denen die Arme beweglich geführt werden. Die Bohrungen können in Längsrichtung verlaufende Spülrillen umfassen, durch die Fluide zur Sterilisation geleitet werden können.

Diese Ausbildung der Vorrichtung kann ergänzt werden durch wenigstens eine drehbar mit dem Gehäuse verbundene Stellscheibe mit wenigstens einer nach außen oder nach innen gerichteten Kontur zur radialen Verschiebung der Arme. Durch eine drehbar gelagerte Stellscheibe kann die lineare Bewegung der Arme an die Rotationsbewegung der Stellscheibe gekoppelt werden. Dies kann beispielsweise dadurch umgesetzt werden, dass an jedem Arm ein Rad befestigt ist, dass bei einer Drehung der Stellscheibe auf deren Kontur abrollt oder abgleitet und dabei den Arm und das daran befestigte Verschlusselement in radialer Richtung gegen einen Federdruck nach innen bzw. außen drückt oder infolge des Federdruckes wieder in radialer Richtung nach außen bzw. innen kommen lässt. Um dies zu erreichen, ist die Kontur der Stellscheibe vorzugsweise derart geformt, dass sie in ihrem Verlauf ihren radialen Abstand zur Drehachse der Stellscheibe verändert. Alternativ oder zusätzlich hierzu können die Arme auch durch das durch die Vorrichtung strömende Fluid oder ein anderes Fluid bewegt werden. An der Kontur der Stellscheibe können Rastpunkte vorgesehen sein, die eine definierte Stellung für die Räder darstellen.

Die Kontur der Stellscheibe kann derart geformt sein, dass sich bei einer Drehung der Stellscheibe alle von der Stellscheibe zu bewegenden Arme synchron bewegen. Dies ist - bei symmetrischer Anordnung der abzudichtenden Einlässe bzw. Auslässe - beispielsweise dann der Fall, wenn auch die Kontur der Stellscheibe symmetrisch geformt ist. Alternativ hierzu kann die Kontur der Stellscheibe derart geformt sein, dass bei einer Drehung der Stellscheibe keine synchrone Bewegung der zu bewegenden Arme erfolgt. Durch eine derartige Gestaltung kann beispielsweise erreicht werden, dass zunächst ein erster Einlass geöffnet wird, um das Gehäuse mit einem ersten Fluid zu durchspülen, bevor ein zweiter Einlass geöffnet wird, um das Gehäuse mit einem zweiten Fluid zu durchströmen.

Es können zwei oder mehr Stellscheiben vorgesehen sein. In diesem Fall sind die Stellscheiben vorzugsweise in Richtung ihrer Drehachse verschiebbar in dem Gehäuse gelagert und weisen unterschiedlich geformte Konturen auf. Dies hat den Vorteil, dass zwischen den unterschiedlichen Stellscheiben "umgeschaltet" werden kann, um unterschiedliche Bewegungsabläufe der Arme und somit unterschiedliche Schaltstellungen zu erreichen. Mit anderen Worten können die Stellscheiben angeordnet sein wie Zahnkränze bei einem Zahnkranzpaket bzw. Ritzelpaket eines Fahrrades.

Ein weiterer Vorteil mehrerer Stellscheiben liegt darin, dass einige (oder alle) der Stellscheiben nur einigen Armen zugeordnet sein können. Dies kann beispielsweise dadurch erreicht werden, dass die auf den Konturen der Stellscheiben abrollenden oder abgleitenden Räder der Arme in unterschiedlichen Ebenen angeordnet sind, die den Ebenen der auf sie einwirkenden Stellscheiben entsprechen.

Alternativ oder zusätzlich kann vorgesehen sein, dass einige (oder alle) der Stellscheiben nicht voll umlauffähig sind, sondern lediglich um einen begrenzten Winkelbereich drehbar sind, und somit nur innerhalb dieses Winkelbereiches angeordnete Arme ansprechen können. Dies hat den Vorteil, dass mehrere - beispielsweise wie ein Kreissektor geformte - Stellscheiben nebeneinander angeordnet werden können, ohne zu kollidieren.

Bei der Verwendung mehrerer Stellscheiben kann weiterhin vorgesehen sein, dass einige (oder alle) der Stellscheiben durch separate Antriebe angetrieben werden. Dies hat den Vorteil, dass die Stellscheiben - und die von ihnen bewegten Arme - individuell angesprochen werden können, wodurch eine besonders variable Steuerung der Durchflussmengen und Durchflussrichtungen möglich ist. Alternativ hierzu kann ein gemeinsamer Antrieb für alle Stellscheiben vorgesehen sein, was konstruktiv besonders einfach realisierbar ist.

Schließlich kann vorgesehen sein, dass eine (oder alle) der Stellscheiben zwei oder mehr Konturen aufweisen. In diesem Fall sind die Konturen derselben Stellscheibe vorzugsweise unterschiedlich geformt. Es können zwei Konturen vorgesehen sein, von denen eine Kontur nach innen gerichtet ist und die andere Kontur nach außen gerichtet ist. Dies ermöglich es, dass die an den Armen befestigten Räder (oder andere Führungselemente) beidseitig an den beiden entsprechend geformten Konturen abgleiten und somit von derselben Stellscheibe radial nach innen und radial nach außen zwangsführt werden können.

Eine besonders vorteilhafte Verwendung der zuvor beschriebenen Vorrichtung in allen beschriebenen Ausgestaltungen liegt in der Sterilisation von Lebensmittelverpackungen. Die Eignung der Vorrichtung für diesen Zweck liegt zunächst darin, dass eine sichere Abdichtung der Einlässe bzw. Auslässe ermöglicht wird und dass mehrere Schaltstellungen möglich sind, wodurch zwischen mehreren bei der Sterilisation von Lebensmittelverpackungen eingesetzten Fluiden umgeschaltet werden kann (z.B. sterile Luft, Wasserdampf, Wasserstoffperoxid, Säure, Lauge, Reinigungsmedium, Kondensat, Stickstoff, Kohlensäure oder abzufüllende Lebensmittel). Eine besondere Eignung ergibt sich zudem daraus, dass diejenigen Verschlusselemente, die in der eingestellten Schaltstellung keinen Einlass bzw. Auslass abdichten, aufgrund ihrer ständigen Anordnung innerhalb des Gehäuses zwangsläufig von dem für die Sterilisation der Lebensmittelverpackungen verwendeten Fluid umströmt werden, so dass diese Verschlusselemente und insbesondere ihre Federelemente zwangsläufig ebenfalls gereinigt und sterilisiert werden. Die Eignung für den genannten Zweck ergibt sich auch daraus, dass sich sämtliche Teile der Vorrichtung aus Materialien herstellen lassen, die höchste hygienische Anforderungen erfüllen (z.B. Edelstahl) und dass die Vorrichtung schmierstofffrei betrieben werden kann.

Die Erfindung wird nachfolgend anhand einer lediglich ein bevorzugtes Ausführungsbeispiel darstellenden Zeichnung näher erläutert. In der Zeichnung zeigen:
- Fig. 1a: eine erste Ausgestaltung einer erfindungsgemäßen Vorrichtung in einer ersten Schaltstellung in Draufsicht,
- Fig. 1b: die Vorrichtung aus Fig. 1a in einer zweiten Schaltstellung,
- Fig. 1c: den Arm mit den beiden Verschlusselementen und einem Auslass der Vorrichtung aus Fig. 1a/Fig. 1b in geöffneter Schaltstellung,
- Fig. 1d: den Arm mit den beiden Verschlusselementen und einem Auslass der Vorrichtung aus Fig. 1a/Fig. 1b in geschlossener Schaltstellung,
- Fig. 2a: eine zweite Ausgestaltung einer erfindungsgemäßen Vorrichtung in Draufsicht,
- Fig. 2b: die Vorrichtung aus Fig. 2a mit einem veränderten Arm,
- Fig. 3: eine dritte Ausgestaltung einer erfindungsgemäßen Vorrichtung in Draufsicht,
- Fig. 4: eine vierte Ausgestaltung einer erfindungsgemäßen Vorrichtung in Draufsicht,
- Fig. 5a: eine fünfte Ausgestaltung einer erfindungsgemäßen Vorrichtung in einer ersten Schaltstellung in Draufsicht,
- Fig. 5b: die Vorrichtung aus Fig. 5a in einer zweiten Schaltstellung,
- Fig. 6: eine sechste Ausgestaltung einer erfindungsgemäßen Vorrichtung in Draufsicht, und
- Fig. 7: eine siebte Ausgestaltung einer erfindungsgemäßen Vorrichtung in Draufsicht.

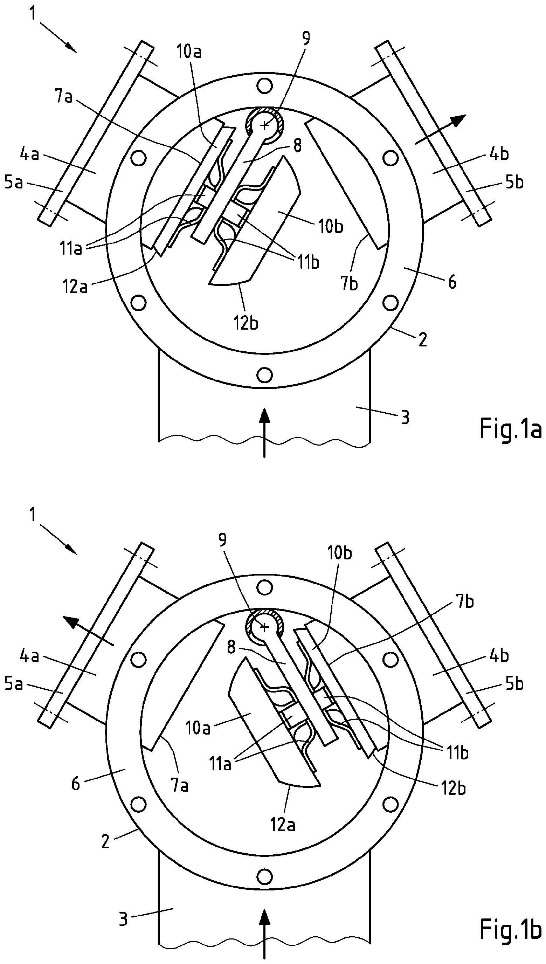

Fig. 1a und Fig. 1b zeigen eine erste Ausgestaltung einer erfindungsgemäßen Vorrichtung 1 in einer ersten und in einer zweiten Schaltstellung in Draufsicht. Die dargestellte Vorrichtung 1 umfasst ein zylindrisches Gehäuse 2, das einen Einlass 3 und zwei Auslässe 4a, 4b aufweist. Bei dem Einlass 3 und den beiden Auslässen 4a, 4b handelt es sich um kurze zylindrische Metallrohre, die an ihren außerhalb des Gehäuses 2 liegenden Enden jeweils einen Flansch 5a, 5b aufweisen, an den (in Fig. 1a/Fig. 1b nicht dargestellte) Rohre oder Schläuche angeschlossen werden können. Das Gehäuse 2 weist ferner einen Flansch 6 auf, auf den ein (in Fig. 1a/Fig. 1b nicht dargestellter) Gehäusedeckel aufgesetzt und mit dem Gehäuse 2 verschraubt werden kann. Der Einlass 3 wurde derart an das Gehäuse 2 angeschlossen, dass sich das Ende des Einlasses 3 an die zylindrische Form des Gehäuses 2 anpasst. Der Einlass 3 ragt demnach nicht in das Gehäuse 2 hinein. Demgegenüber ragen die Einlässe 4a, 4b mit ihren Enden 7a, 7b in das Gehäuse 2 hinein. Zudem wurden die zylindrischen Einlässe 4a, 4b an ihren in dem Gehäuse 2 angeordneten Enden 7a, 7b gerade - also rechtwinklig zu ihrer Längsachse - abgeschnitten, so dass die beiden Auslässe 4a, 4b an ihren in dem Gehäuse angeordneten Enden 7a, 7b kreisförmig ausgebildet sind.

Weiterhin ist bei der in Fig. 1a/Fig. 1b dargestellten Vorrichtung 1 ein Arm 8 vorgesehen, der innerhalb des Gehäuses 2 angeordnet ist und beweglich mit dem Gehäuse 2 verbunden ist. Die bewegliche Lagerung des Armes 8 erfolgt über eine Drehachse 9, um die der Arm 8 schwenkbar ist. Die Drehachse 9 weist relativ zu dem Gehäuse 2 eine feste Lage auf, sie ist beispielsweise mit ihren beiden Enden in dem Boden und in dem Deckel des Gehäuses 2 drehbar gelagert. Der Arm 8 trägt an seinem Ende zwei gegenüberliegend angeordnete Verschlusselemente 10a, 10b. Zwischen dem Arm 8 und den beiden Verschlusselementen 10a, 10b ist jeweils ein Federelement 11a, 11b aus Metall angeordnet, das eine Relativbewegung zwischen den beiden Verschlusselementen 10a, 10b und dem Arm 8 erlaubt und die beiden Verschlusselemente 10a, 10b im entlasteten Zustand in eine Ausgangsstellung zurückführt. Die Federelemente 11a, 11b sind vorzugsweise lediglich zwischen dem Arm 8 und den beiden Verschlusselementen 10a, 10b eingeklemmt. Die Schenkel der Federelemente 11a, 11b können daher auf der Oberfläche des Armes 8 und/oder auf den Oberflächen der Verschlusselemente 10a, 10b abgleiten.

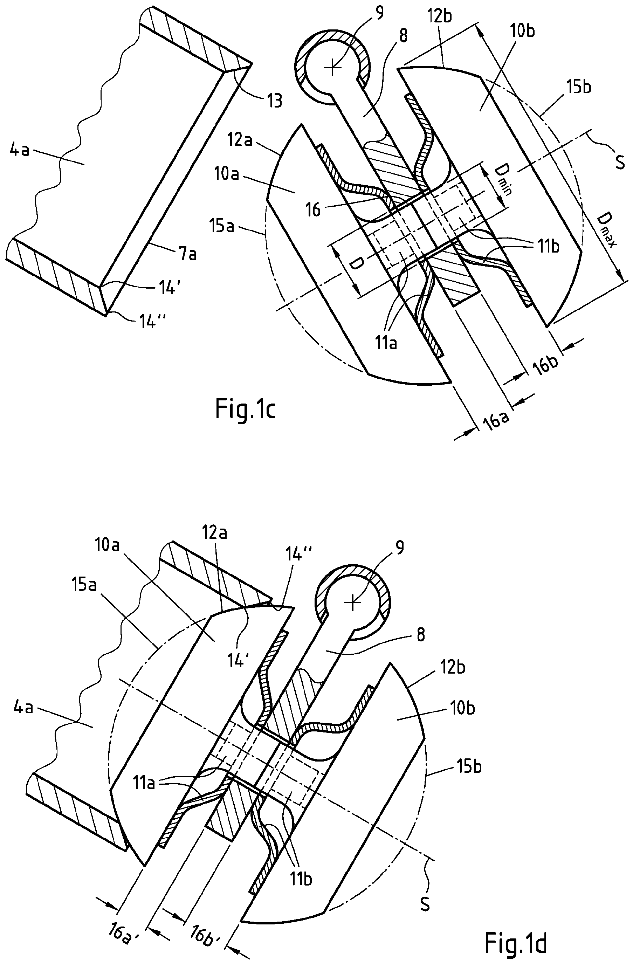

Das linke Verschlusselement 10a ist dem linken Auslass 4a zugeordnet und kann bei entsprechender Stellung des Armes 8 den linken Auslass 4a verschließen, so dass das durch den Einlass 3 in das Gehäuse 2 einströmende Fluid durch den rechten, geöffneten Auslass 4b wieder aus dem Gehäuse 2 austreten kann. Diese Stellung ist in Fig. 1 dargestellt (Strömungsrichtung durch Pfeile angedeutet). Demgegenüber ist das rechte Verschlusselement 10b dem rechten Auslass 4b zugeordnet und kann bei entsprechender Stellung des Armes 8 den rechten Auslass 4b verschließen, so dass das durch den Einlass 3 in das Gehäuse 2 einströmende Fluid durch den linken, geöffneten Auslass 4a wieder aus dem Gehäuse 2 austreten kann. Diese Stellung ist in Fig. 1b dargestellt (Strömungsrichtung durch Pfeile angedeutet). Um eine besonders zuverlässige Abdichtung der Auslässe 4a, 4b zu erreichen, weisen die Verschlusselemente 10a, 10b gekrümmte Dichtflächen 12a, 12b auf, worauf im Zusammenhang mit Fig. 1c und Fig. 1d nachfolgend genauer eingegangen wird. Neben den beiden in Fig. 1a und Fig. 1b gezeigten geschlossenen Stellungen ist auch eine neutrale Stellung des Armes 8 möglich, bei dem beide Auslässe 4a, 4b geöffnet sind.

In Fig. 1c und Fig. 1d ist der Arm 8 mit den beiden Verschlusselementen 10a, 10b und dem einen Auslass 4a der Vorrichtung 1 aus Fig. 1a/Fig. 1b in geöffneter (Fig. 1c) und in geschlossener (Fig. 1d) Schaltstellung dargestellt. Die bereits im Zusammenhang mit Fig. 1a oder Fig. 1b beschriebenen Bereiche der Vorrichtung 1 sind in Fig. 1c und in Fig. 1d mit entsprechenden Bezugszeichen versehen.

In Fig. 1c ist links erkennbar, dass der Auslass 4a im Bereich seines Endes 7a eine umlaufende Fase 13 aufweist. Aufgrund der Fase 13 entstehen zwei umlaufende Kanten 14', 14", von denen die innere Kante 14' als Dichtkante eingesetzt wird. Alternativ zu der dargestellten Variante könnte ebenso gut die äußere Kante 14" oder eine andere, zwischen den beiden Kanten 14', 14" angeordnete Kante als Dichtkante eingesetzt werden. Im rechten Bereich von Fig. 1c ist erkennbar, dass beide Verschlusselemente 10a, 10b rotationssymmetrisch ausgebildet sind und eine Symmetrieachse S aufweisen, die in der gezeigten Ausgangsstellung senkrecht auf dem Arm 8 steht. Die Dichtflächen 12a, 12b der Verschlusselemente 10a, 10b sind konvex nach außen gekrümmt und liegen jeweils vollständig auf einer Kugeloberfläche 15a, 15b. Die Dichtflächen 12a, 12b sind also kugelförmig gekrümmt. Die beiden Kugeloberflächen 15a, 15b können Teil einer gemeinsamen Kugeloberfläche sein oder zwei unterschiedliche Kugeloberflächen aufspannen, die nicht deckungsgleich sind. Die Verschlusselemente 10a, 10b bilden keine Vollkugel, da einerseits im äußeren Bereich die Kugelkuppe fehlt und die Verschlusselemente 10a, 10b andererseits im inneren Bereich wesentlich schlanker ausgebildet sind, um den Arm 8 und die Federelemente 11a, 11b dort anordnen zu können.

In Fig. 1d ist die geschlossene Schaltstellung dargestellt, in welcher der Arm 8 nach links geschwenkt ist, so dass das Verschlusselement 10a auf den linken Auslass 4a gepresst wird, um diesen zu verschließen. Beim Zusammenpressen entsteht ein umlaufender Linienkontakt zwischen der inneren Kante 14' des linken Auslasses 4a und der Dichtfläche 12a des Verschlusselements 10a. Die übrigen Bereiche des Auslasses 4a, insbesondere die Fase 13 mit der äußeren Kante 14", haben hingegen keinen Kontakt zur Dichtfläche 12a des Verschlusselements 10a. Durch die Ausbildung eines Linienkontakts zwischen dem Auslass 4a und dem Verschlusselement 10a konzentriert sich die Anpresskraft auf eine sehr geringe Fläche, so dass ein sehr hoher Druck entsteht. Dies führt zu einer besonders zuverlässigen Abdichtung.

Die beiden gegenüberliegenden Verschlusselemente 10a, 10b sind miteinander verbunden, insbesondere verschraubt. Hierzu kann beispielsweise in beiden Verschlusselementen 10a, 10b ein Innengewinde vorgesehen sein, so dass beide Verschlusselemente 10a, 10b durch einen Gewindestift mit Außengewinde zusammengehalten werden können. Die Verbindung zwischen den beiden Verschlusselementen 10a, 10b und dem Arm 8 erfolgt beispielsweise über ein Durchgangsloch 16, das in dem Arm 8 vorgesehen ist. Zur Ausbildung der Verbindung wird beispielsweise ein Gewindestift in eines der beiden Verschlusselemente 10a geschraubt und das Federelement 11a wird aufgesteckt. Dieses Verschlusselement 10a wird dann mit dem Gewindestift voran durch das Durchgangsloch 16 des Armes 8 gesteckt. Von der anderen Seite kann sodann das Federelement 11b aufgesteckt werden und das zweite Verschlusselement 10b auf den Gewindestift geschraubt werden, so dass beide Verschlusselemente 10a, 10b fest miteinander verbunden sind. Es kann vorgesehen sein, dass der zwischen den beiden Verschlusselementen 10a, 10b entstehende Fügespalt mit einer Dichtung versehen wird und/oder verklebt wird.

Das Durchgangsloch 16 weist einen Durchmesser D auf, der größer ist als der Mindestdurchmesser Dₘᵢₙ, den die beiden miteinander verbundenen Verschlusselemente 10a, 10b aufweisen. Der Mindestdurchmesser Dₘᵢₙ befindet sich vorzugsweise im Bereich der Trennebene der beiden miteinander verbundenen Verschlusselemente 10a, 10b. Da der Mindestdurchmesser Dₘᵢₙ kleiner ist als der Durchmesser D des Durchgangsloches 16, können die beiden Verschlusselemente 10a, 10b sehr frei bewegt werden und insbesondere sowohl in Richtung der Symmetrieachse S verschoben werden als auch in jede Richtung gegenüber der Symmetrieachse S geneigt werden. Durchmesser D des Durchgangsloches 16 ist zwar größer als der Mindestdurchmesser Dₘᵢₙ der beiden miteinander verbundenen Verschlusselemente 10a, 10b, jedoch kleiner als der Maximaldurchmesser Dₘₐₓ der beiden miteinander verbundenen Verschlusselemente 10a, 10b. Indem der Maximaldurchmesser Dₘₐₓ der beiden miteinander verbundenen Verschlusselemente 10a, 10b größer ist als der Durchmesser D des Durchgangsloches 16 wird erreicht, dass die beiden miteinander verbundenen Verschlusselemente 10a, 10b nicht aus dem Durchgangsloch 16 herausrutschen können und somit verliersicher und gleichwohl beweglich mit dem Arm 8 verbunden sind. Durch die vorgespannten Federelemente 11a, 11b, die beidseitig zwischen dem Arm 8 und den beiden miteinander verbundenen Verschlusselementen 10a, 10b eingeklemmt sind, wird verhindert, dass die Verschlusselemente 10a, 10b lose in dem Durchgangsloch 16 hin- und her rutschen. Durch die Federelemente 11a, 11b wird also eine Ausrichtung oder Nivellierung der Verschlusselemente 10a, 10b im entlasteten Zustand erreicht.

In der (in Fig. 1c dargestellten) geöffneten Schaltstellung sind die Federelemente 11a, 11b gleichmäßig vorgespannt, wobei sich ein Abstand 16a zwischen der Rückseite des Verschlusselements 10a und dem Arm 8 einstellt. Entsprechendes gilt für die andere Seite des Armes 8, auf der sich zwischen der Rückseite des Verschlusselements 10b und dem Arm 8 ein Abstand 16b einstellt. Bei gleicher Vorspannung der Federelemente 11a, 11b entspricht der Abstand 16a dem Abstand 16b. Die Vorspannung der Federelemente 11a, 11b sorgt zudem für eine präzise, neigungsfreie Ausrichtung der beiden Verschlusselemente 10a, 10b.

In der (in Fig. 1d dargestellten) geschlossenen Schaltstellung ist das Federelement 11a hingegen stark komprimiert, so dass sich ein Abstand 16a' zwischen der Rückseite des Verschlusselements 10a und dem Arm 8 einstellt, der kleiner ist als der Abstand 16a. In entsprechender Weise wurde das gegenüberliegende Federelement 11b stark entspannt, so dass sich ein Abstand 16b' zwischen der Rückseite des Verschlusselements 10b und dem Arm 8 einstellt, der größer ist als der Abstand 16b. Bei einer festen, unelastischen Verbindung der beiden Verschlusselements 10a, 10b entspricht die Differenz aus den Abständen 16a und 16a' der Differenz aus den Abständen 16b und 16b'; in diesem Fall werden beide Verschlusselemente 10a, 10b gemeinsam entlang ihrer Symmetrieachse S verschoben. Die Federelemente 11a, 11b erlauben also eine lineare Bewegung der Verschlusselemente 10a, 10b in Richtung der Symmetrieachse S relativ zu dem Arm 8. Der Hub dieser Linearbewegung kann im Bereich zwischen 0,1 mm und 10 mm liegen.

Neben einer Linearbewegung erlauben die Federelemente 11a, 11b auch eine (in Fig. 1d nicht dargestellte) Schwenkbewegung der Verschlusselemente 10a, 10b relativ zu dem Arm 8. Die Schwenkbewegung führt dazu, dass die Symmetrieachse S der Verschlusselemente 10a, 10b nicht mehr senkrecht auf dem Arm 8 steht. Der Umfang der Schwenkbewegung der Verschlusselemente 10a, 10b kann im Bereich zwischen ±0,1° und 20° liegen (in beide Richtungen).

Alternativ zu der dargestellten Variante kann jedes Verschlusselement 10a, 10b auch über ein (nicht dargestelltes) Kugelgelenk mit dem Arm 8 verbunden sein, wobei ebenfalls ein vorgespanntes Federelement 11a, 11b zwischen dem Verschlusselement 10a, 10b und dem Arm 8 angeordnet sein sollte, um die Verschlusselement 10a, 10b im entlasteten Zustand auszurichten.

Die beschriebene Vorrichtung 1 gehört zur Gruppe der Wegeventile, die regelmäßig nach der Anzahl der Anschlüsse und nach der Anzahl der möglichen Schaltstellungen eingeteilt werden. Da bei der in Fig. 1a bis Fig. 1d gezeigten Ausgestaltung der Vorrichtung 1 insgesamt 3 Anschlüsse (ein Einlass 3 und zwei Auslässe 4a, 4b) vorhanden sind und - abgesehen von der neutralen Schaltstellung - zwei Schaltstellungen möglich sind, handelt es sich um ein 3/2-Wegeventil.

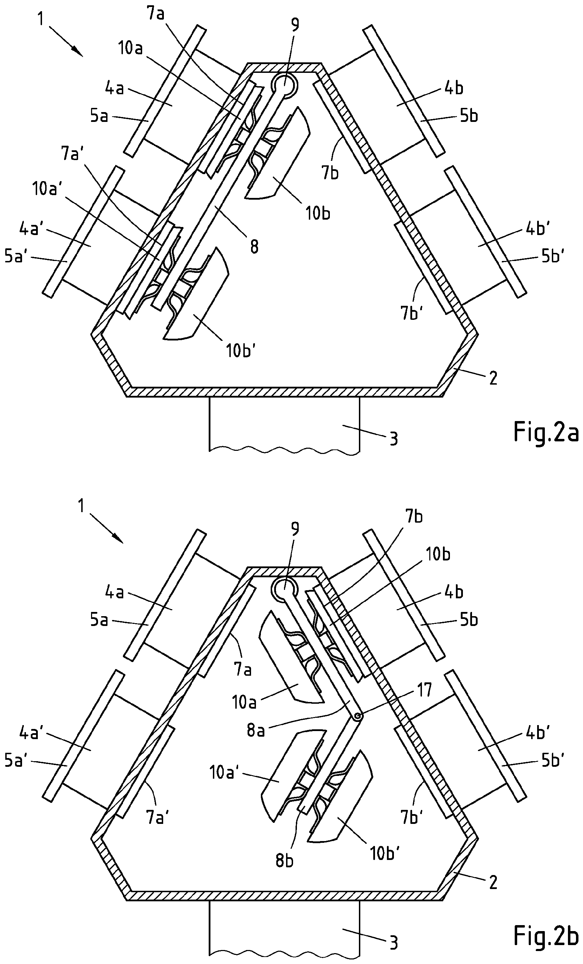

Fig. 2a zeigt eine zweite Ausgestaltung einer erfindungsgemäßen Vorrichtung 1 in Draufsicht. Die bereits im Zusammenhang mit Fig. 1a bis Fig. 1d beschriebenen Bereiche der Vorrichtung 1 sind in Fig. 2a mit entsprechenden Bezugszeichen versehen. Der wesentliche Unterschied zu der ersten Ausgestaltung (Fig. 1a bis Fig. 1d) liegt darin, dass bei der zweiten Ausgestaltung der erfindungsgemäßen Vorrichtung 1 zwei weitere Auslässe 4a', 4b' vorgesehen sind, so dass insgesamt vier Auslässe 4a, 4a', 4b, 4b' vorhanden sind. An jedem Auslass 4a, 4a', 4b, 4b' ist wiederum ein Flansch 5a, 5a', 5b, 5b' zum Anschließen von Schläuchen oder Rohren und ein in das Gehäuse 2 hineinragendes Ende 7a, 7a', 7b, 7b' vorgesehen. Die in Fig. 2a dargestellte Ausgestaltung der Vorrichtung 1 weist zudem einen verlängerten Arm 8 auf, an dem insgesamt vier Verschlusselemente 10a, 10a', 10b, 10b' auf die zuvor beschriebene Weise - also über eine Durchführung der Verschlusselemente 10a, 10a', 10b, 10b' durch ein Durchgangsloch 16 des Armes 8 bei gleichzeitiger Ausrichtung durch vorgespannte Federelemente 11a, 11b - befestigt sind. Die Länge des Armes 8 und die Position seiner Drehachse 9, die Anordnung der Verschlusselemente 10a, 10a', 10b, 10b' an dem Arm 8 sowie die Anordnung der Auslässe 4a, 4a', 4b, 4b' sind derart aufeinander abgestimmt, dass bei einer Schwenkung des Armes 8 nach links die Auslässe 4a und 4a' durch die Verschlusselemente 10a und 10a' verschlossen werden. Bei einer Schwenkung des Armes 8 nach rechts werden hingegen die Auslässe 4b und 4b' durch die Verschlusselemente 10b und 10b' verschlossen. Um diese Anordnung zu ermöglichen, hat das Gehäuse 2 bei dieser Ausgestaltung der Vorrichtung 1 eine eckige Form, wobei jeweils zwei Auslässe nebeneinander in derselben Seitenfläche des Gehäuses 2 angeordnet sind. Neben diesen beiden beschriebenen Stellungen ist auch eine neutrale Stellung des Armes 8 möglich, bei dem alle vier Auslässe 4a, 4a', 4b, 4b' geöffnet sind. Da bei der in Fig. 2a gezeigten Ausgestaltung der Vorrichtung 1 insgesamt 5 Anschlüsse (ein Einlass 3 und vier Auslässe 4a, 4a', 4b, 4b') vorhanden sind und - abgesehen von der neutralen Schaltstellung - zwei Schaltstellungen möglich sind, handelt es sich um ein 5/2-Wegeventil.

In Fig. 2b ist die die Vorrichtung 1 aus Fig. 2a mit einem veränderten Arm 8 dargestellt. Der Arm 8 umfasst zwei Teile 8a, 8b, die durch ein Gelenk 17 beweglich miteinander verbunden sind. Der erste Teil 8a des Armes 8 ist um die Drehachse 9 schwenkbar und der zweite Teil 8b des Armes 8 ist aufgrund des Gelenkes 17 um den ersten Teil 8a des Armes 8 schwenkbar. Dies hat zur Folge, dass der erste Teil 8a des Armes 8 um eine Drehachse schwenkbar ist, die relativ zum Gehäuse 2 eine feste Lage aufweist, während der zweite Teil 8b des Armes 8 um eine durch das Gelenk 17 laufende Drehachse schwenkbar ist, die relativ zu dem ersten Teil 8a des Armes 8 eine feste Lage aufweist. Durch den veränderten Arm 8 kann die in Fig. 2b dargestellte Vorrichtung 1 vier Schaltstellungen einnehmen: Bei einer kollinearen Ausrichtung der beiden Teile 8a, 8b des Armes 8 ergeben sich zwei Schaltstellungen, die den Schaltstellungen entsprechen, die zuvor im Zusammenhang mit Fig. 2a beschrieben wurden; bei einer abgeknickten Ausrichtung der beiden Teile 8a, 8b des Armes 8 ergeben sich hingegen zwei neue Schaltstellungen. Beispielsweise kann das Verschlusselement 10b den Auslass 4b versperren, während der zweite Teil 8b des Armes 8 zurückgeschwenkt ist, so dass das daran befestigte Verschlusselement 10b' den Auslass 4b' offen lässt (Fig. 2b). In entsprechender (in Fig. 2b nicht dargestellter) Weise kann das Verschlusselement 10a den Auslass 4a versperren, während der zweite Teil 8b des Armes 8 zurückgeschwenkt ist, so dass das daran befestigte Verschlusselement 10a' den Auslass 4a' offen lässt. Der zweite Teil 8b des Armes 8 kann beispielsweise durch eine in oder an dem Arm 8 angeordnete Schenkelfeder in die abgeknickte Stellung gedrückt werden (in Fig. 2b nicht dargestellt). Die gerade, kollineare Ausrichtung der beiden Teile 8a, 8b des Armes 8 kann erreicht werden, indem die beiden Teile 8a, 8b des Armes 8 unter Überwindung der Federkraft durch einen in oder an dem Arm 8 angeordneten Seilzug ("Bowdenzug") gerade ausgerichtet werden (in Fig. 2b nicht dargestellt). Alternativ zu dem Seilzug können die beiden Teile 8a, 8b des Armes 8 auch durch Druckluft oder (elektro-)magnetische Kräfte gerade ausgerichtet werden. Da bei der in Fig. 2b gezeigten Ausgestaltung der Vorrichtung 1 insgesamt 5 Anschlüsse (ein Einlass 3 und vier Auslässe 4a, 4a', 4b, 4b') vorhanden sind und - abgesehen von der neutralen Schaltstellung - vier Schaltstellungen möglich sind, handelt es sich um ein 5/4-Wegeventil.

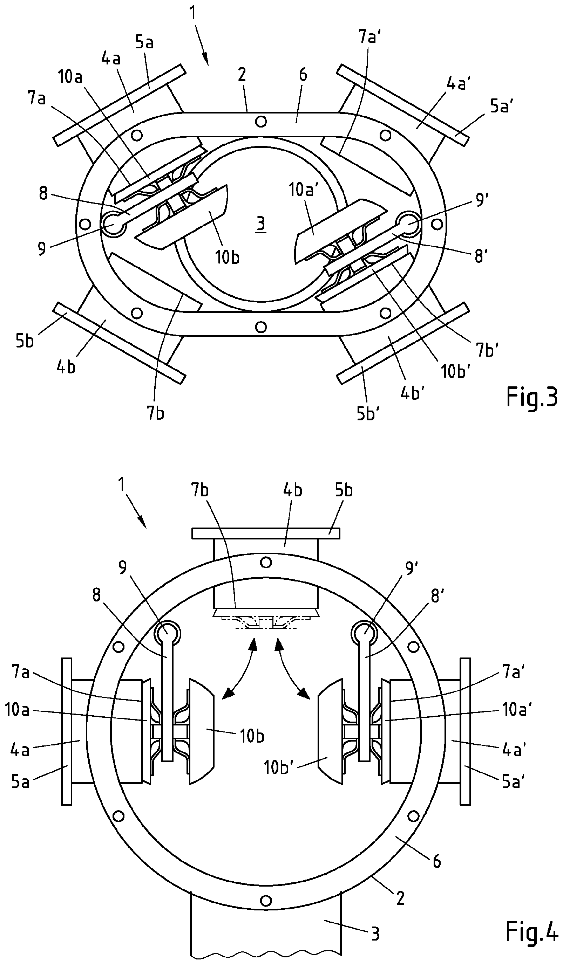

Fig. 3 zeigt eine dritte Ausgestaltung einer erfindungsgemäßen Vorrichtung 1 in Draufsicht. Die bereits im Zusammenhang mit Fig. 1a bis Fig. 2b beschriebenen Bereiche der Vorrichtung 1 sind in Fig. 3 mit entsprechenden Bezugszeichen versehen. Der wesentliche Unterschied zu der ersten Ausgestaltung (Fig. 1a bis Fig. 1d) und der zweiten Ausgestaltung (Fig. 2a und Fig. 2b) liegt darin, dass bei der dritten Ausgestaltung der erfindungsgemäßen Vorrichtung 1 zwei separate Arme 8, 8' vorgesehen sind, die um jeweils eine Drehachse 9, 9' schwenkbar sind. Die beiden Drehachsen 9, 9' liegen an gegenüberliegenden Seiten des Gehäuses 2 und weisen relativ zu dem Gehäuse 2 eine feste Lage auf. Wie bei der zweiten Ausgestaltung (Fig. 2a und Fig. 2b) sind auch bei der dritten Ausgestaltung der erfindungsgemäßen Vorrichtung 1 insgesamt vier Auslässe 4a, 4a', 4b, 4b' vorhanden. Wiederum ist an jedem Auslass 4a, 4a', 4b, 4b' ein Flansch 5a, 5a', 5b, 5b' zum Anschließen von Schläuchen oder Rohren und ein in das Gehäuse 2 hineinragendes Ende 7a, 7a', 7b, 7b' vorgesehen. Die Länge des Armes 8 und die Position seiner Drehachse 9, die Anordnung der Verschlusselemente 10a, 10b an dem Arm 8 sowie die Anordnung der Auslässe 4a, 4b sind derart aufeinander abgestimmt, dass bei einer Schwenkung des Armes 8 entweder der Auslass 4a durch das Verschlusselement 10a verschlossen wird oder dass der Auslass 4b durch das Verschlusselement 10b verschlossen wird. Entsprechendes gilt für die Länge des Armes 8' und die Position seiner Drehachse 9', die Anordnung der Verschlusselemente 10a', 10b' an dem Arm 8' sowie die Anordnung der Auslässe 4a', 4b'. Auch bei dieser Ausgestaltung der Vorrichtung 1 sind neutrale Stellungen der Arme 8, 8' möglich, bei denen alle Auslässe 4a, 4a', 4b, 4b' geöffnet bleiben. Um eine Kollision der beiden Arme 8, 8' zu verhindern, hat das Gehäuse 2 bei dieser Ausgestaltung der Vorrichtung 1 eine längliche Form, die zwei gegenüberliegende gerade Seitenflächen und zwei gegenüberliegende gekrümmte Seitenflächen umfasst, wobei die beiden Arme 8, 8' jeweils im Bereich einer gekrümmten Seitenfläche des Gehäuses 2 angeordnet sind. Auch bei der dritten Ausgestaltung der Erfindung erfolgt die Verbindung zwischen den Verschlusselementen 10a, 10a', 10b, 10b' und den Armen 8, 8' auf die zuvor beschrieben Weise, also über eine Durchführung der Verschlusselemente 10a, 10a', 10b, 10b' durch ein Durchgangsloch 16 der Arme 8, 8' bei gleichzeitiger Ausrichtung durch vorgespannte Federelemente 11a, 11b. Da bei der in Fig. 3 gezeigten Ausgestaltung der Vorrichtung 1 insgesamt 5 Anschlüsse (ein Einlass 3 und vier Auslässe 4a, 4a', 4b, 4b') vorhanden sind und - abgesehen von den neutralen Schaltstellungen - vier Schaltstellungen möglich sind, handelt es sich um ein 5/4-Wegeventil.

In Fig. 4 ist eine vierte Ausgestaltung einer erfindungsgemäßen Vorrichtung 1 in Draufsicht dargestellt. Die bereits im Zusammenhang mit Fig. 1a bis Fig. 3 beschriebenen Bereiche der Vorrichtung 1 sind in Fig. 4 mit entsprechenden Bezugszeichen versehen. Die vierte Ausgestaltung der Vorrichtung 1 unterscheidet sich von den zuvor gezeigten Ausgestaltungen insbesondere dadurch, dass zwei separate Arme 8, 8', jedoch nur drei Ausgänge 4a, 4a' 4b vorhanden sind. Beide Arme 8, 8' sind um jeweils eine Drehachse 9, 9' schwenkbar, die auch bei dieser Ausgestaltung relativ zu dem Gehäuse 2 eine feste Lage aufweisen. Erneut ist an jedem Auslass 4a, 4a', 4b ein Flansch 5a, 5a', 5b zum Anschließen von Schläuchen oder Rohren und ein in das Gehäuse 2 hineinragendes Ende 7a, 7a', 7b vorgesehen. Die Abstimmung der Längen der Arme 8, 8' und der Positionen ihrer Drehachsen 9, 9', der Anordnung der Verschlusselemente 10a, 10a', 10b, 10b' an den Armen 8, 8' sowie die Anordnung der Auslässe 4a, 4a', 4b weist jedoch bei der vierten Ausgestaltung Besonderheiten auf: Eine Schwenkung des ersten Armes 8 führt dazu, dass entweder der Auslass 4a durch das Verschlusselement 10a verschlossen wird oder dass der Auslass 4b durch das Verschlusselement 10b verschlossen wird; eine Schwenkung des zweiten Armes 8' führt dazu, dass entweder der Auslass 4a' durch das Verschlusselement 10a' verschlossen wird oder dass der Auslass 4b durch das Verschlusselement 10b' verschlossen wird. Während der linke Auslass 4a allein dem ersten Arm 8 zugeordnet ist und der rechte Auslass 4a' allein dem zweiten Arm 8' zugeordnet ist, ist der obere Auslass 4b beiden Armen 8, 8' zugeordnet und kann von mehreren unterschiedlichen Verschlusselementen 10b, 10b' abwechselnd verschlossen werden. Da der obere Auslass 4b beiden Armen 8, 8' zugeordnet ist, kann es grundsätzlich auch zu einer Kollision kommen. Um dies zu vermeiden, können nicht beide Arme 8, 8' gleichzeitig in Richtung des oberen Auslasses 4b geschwenkt werden, wodurch eine - theoretische denkbare - Schaltstellung nicht realisierbar ist. Auch bei dieser Ausgestaltung der Vorrichtung 1 sind neben den beschriebenen Stellungen neutrale Stellungen der Arme 8, 8' möglich, bei denen alle Auslässe 4a, 4a', 4b geöffnet bleiben. Zudem erfolgt auch bei der vierten Ausgestaltung der Erfindung die Verbindung zwischen den Verschlusselementen 10a, 10a', 10b, 10b' und den Armen 8, 8' auf die zuvor beschrieben Weise, also über eine Durchführung der Verschlusselemente 10a, 10a', 10b, 10b' durch ein Durchgangsloch 16 der Arme 8, 8' bei gleichzeitiger Ausrichtung durch vorgespannte Federelemente 11a, 11b. Da bei der in Fig. 4 gezeigten Ausgestaltung der Vorrichtung 1 insgesamt 4 Anschlüsse (ein Einlass 3 und drei Auslässe 4a, 4a', 4b) vorhanden sind und - abgesehen von den neutralen Schaltstellungen - drei Schaltstellungen möglich sind, handelt es sich um ein 4/3-Wegeventil.

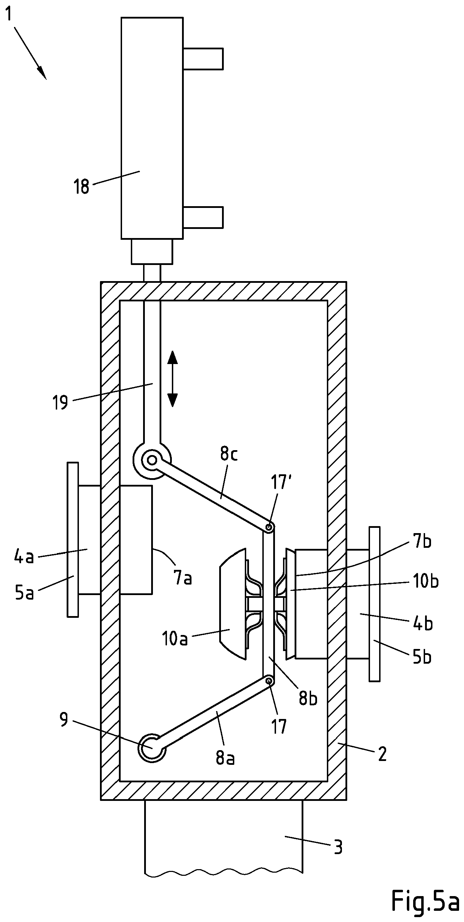

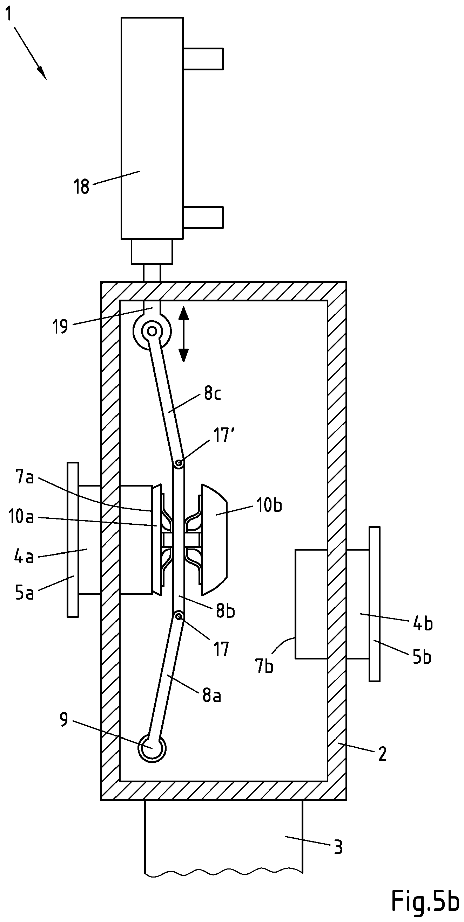

Fig. 5a und Fig. 5b zeigen eine fünfte Ausgestaltung einer erfindungsgemäßen Vorrichtung 1 in einer ersten Schaltstellung (Fig. 5a) und in einer zweiten Schaltstellung (Fig. 5b) in Draufsicht. Die bereits im Zusammenhang mit Fig. 1a bis Fig. 4 beschriebenen Bereiche der Vorrichtung 1 sind in Fig. 5a und in Fig. 5b mit entsprechenden Bezugszeichen versehen. Die fünfte Ausgestaltung der Vorrichtung 1 unterscheidet sich von den zuvor gezeigten Ausgestaltungen insbesondere dadurch, dass sich die Längsachsen der beiden Auslässe 4a, 4b an keiner Stelle schneiden, sondern parallel zueinander versetzt verlaufen. Dies hat zur Folge, dass die beiden Auslässe 4a, 4b nicht durch denselben einteiligen, schwenkbaren Arm erreichbar sind. Der bei der fünften Ausgestaltung eingesetzte Arm 8 umfasst daher drei Teile 8a, 8b, 8c, die durch zwei Gelenke 17, 17' beweglich miteinander verbunden sind. Der erste Teil 8a des Armes 8 ist um die Drehachse 9 schwenkbar und der zweite Teil 8b des Armes 8 ist aufgrund des Gelenkes 17 um den ersten Teil 8a des Armes 8 schwenkbar. Der dritte Teil 8c des Armes 8 ist schließlich aufgrund des Gelenkes 17' um den zweiten Teil 8b des Armes 8 schwenkbar. Dies hat zur Folge, dass der erste Teil 8a des Armes 8 um eine Drehachse 9 schwenkbar ist, die relativ zum Gehäuse 2 eine feste Lage aufweist, während der zweite Teil 8b und der dritte Teil 8c des Armes 8 um Drehachsen schwenkbar sind, die durch die Gelenke 17, 17' verlaufen und somit relativ zu dem ersten Teil 8a des Armes 8 bzw. zu dem zweiten Teil 8b des Armes 8 eine feste Lage aufweisen. Weiterhin sind bei der fünften Ausgestaltung der Vorrichtung 1 zwei Verschlusselemente 10a, 10b vorgesehen, die beide auf die zuvor beschriebene Weise - also über eine Durchführung der Verschlusselemente 10a, 10b durch ein Durchgangsloch 16 des Armes 8, insbesondere seines zweiten Teils 8b, bei gleichzeitiger Ausrichtung durch vorgespannte Federelemente 11a, 11b - mit dem Arm 8 verbunden sind.

Bei der fünften Ausgestaltung der Erfindung ist zudem ein Aktuator 18 vorgesehen, der außerhalb des Gehäuses 2 angeordnet ist und eine in Längsrichtung verschiebbare Stange 19 aufweist, die in das Gehäuse 2 hineingeführt wird. Dort ist die Stange 19 an das Ende des dritten Teils 8c des Armes 8 angeschlossen. Die Längsbewegung der Stange 19 des Aktuators 18 wird daher von dem dritten Teil 8c des Armes 8 über das Gelenk 17' zunächst auf den zweiten Teil 8b des Armes 8 und anschließend über das Gelenk 17 auf den schwenkbar um die Drehachse 9 gelagerten ersten Teil 8a des Armes 8 übertragen.

Durch die zuvor beschriebene Anordnung kann die in Fig. 5a und Fig. 5b dargestellte Vorrichtung zwei Schaltstellungen einnehmen: Bei der ersten, in Fig. 5a gezeigten Schaltstellung wird die Stange 19 des Aktuators 18 weit ausgefahren, so dass der zweite Teil 8b des Armes 8 nach rechts in Richtung des Auslasses 4b ausweicht, wobei das Verschlusselement 10b den Auslass 4b verschließt. Die zweite, in 5b dargestellte Schaltstellung sieht demgegenüber vor, dass die Stange 19 des Aktuators 18 weit eingezogen wird, so dass der zweite Teil 8b des Armes 8 nach links in Richtung des Auslasses 4a gezogen wird, wobei das Verschlusselement 10a den Auslass 4a verschließt. Auch bei dieser Ausgestaltung der Vorrichtung 1 ist neben den beiden beschriebenen Schaltstellungen eine neutrale Schaltstellungen möglich, bei der beide Auslässe 4a, 4b geöffnet bleiben. Da bei der in Fig. 5a und Fig. 5b gezeigten Ausgestaltung der Vorrichtung 1 insgesamt 3 Anschlüsse (ein Einlass 3 und zwei Auslässe 4a, 4b) vorhanden sind und - abgesehen von der neutralen Schaltstellung - zwei Schaltstellungen möglich sind, handelt es sich um ein 3/2-Wegeventil.

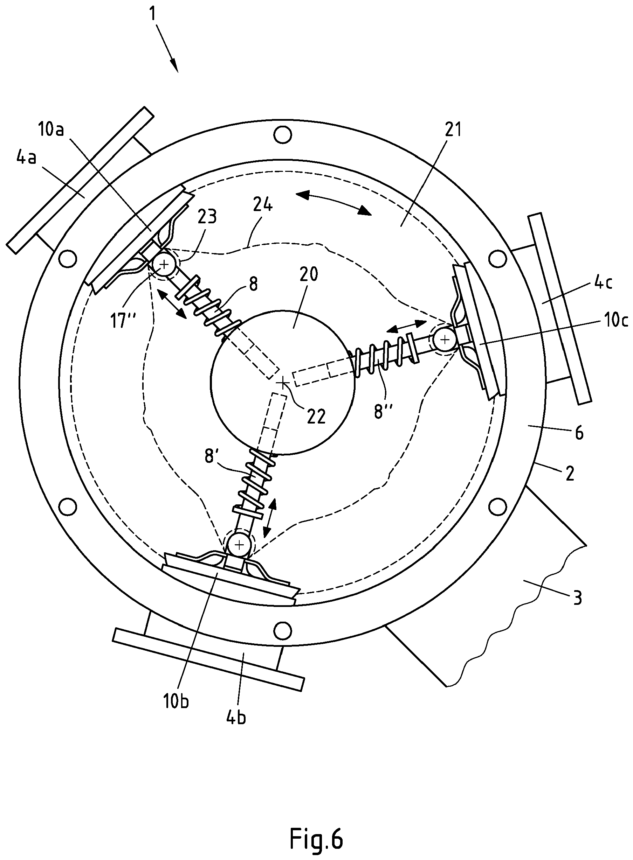

In Fig. 6 ist eine sechste Ausgestaltung einer erfindungsgemäßen Vorrichtung 1 in Draufsicht dargestellt. Die bereits im Zusammenhang mit Fig. 1a bis Fig. 5b beschriebenen Bereiche der Vorrichtung 1 sind in Fig. 6 mit entsprechenden Bezugszeichen versehen. Die sechste Ausgestaltung der Vorrichtung 1 unterscheidet sich von den zuvor gezeigten Ausgestaltungen insbesondere dadurch, dass drei Arme 8, 8', 8" vorgesehen sind, die über eine gemeinsame Linearführung 20 beweglich mit dem Gehäuse 2 verbunden sind. Während die gemeinsame Linearführung 20 fest mit dem Gehäuse verbunden ist, ist jeder der Arme 8, 8', 8" in Längsrichtung relativ zu der Linearführung 20 verschiebbar (dargestellt durch jeweils einen Pfeil). Das Verschließen und Öffnen der drei Auslässe 4a, 4b, 4c erfolgt, indem die Arme 8, 8', 8" in Längsrichtung radial nach außen oder nach innen verschoben werden. An den Enden der Arme 8, 8', 8" ist jeweils ein Verschlusselement 10a, 10b, 10c angeordnet, das auf diese Weise auf das in das Gehäuse 2 ragende Ende 7a, 7b, 7c, des ihm zugeordneten Auslasses 4a, 4b, 4c gepresst werden kann, um diesen zu verschließen. Die Verschlusselemente 10a, 10b, 10c sind jeweils über ein Gelenk 17", insbesondere ein Kugelgelenk, mit den Armen 8, 8', 8" verbunden. Zudem werden die Verschlusselemente 10a, 10b, 10c auf die bereits zuvor beschriebene Weise durch Federelemente 11a, 11b, 11c ausgerichtet, die unter Vorspannung zwischen den Verschlusselementen 10a, 10b, 10c und einem hierfür vorgesehenen Absatz der Arme 8, 8', 8" angeordnet sind.

Die drei Arme 8, 8', 8" können unabhängig voneinander in ihrer Längsrichtung bewegt werden, so dass die sechste Ausgestaltung der Vorrichtung 1 eine Vielzahl von Schaltstellungen einnehmen kann. Vorzugsweise ist die lineare Bewegung der Arme 8, 8', 8" an die Rotationsbewegung einer Stellscheibe 21 gekoppelt, die drehbar um eine Drehachse 22 in dem Gehäuse 2 gelagert ist. Dies kann beispielsweise dadurch umgesetzt werden, dass an jedem Arm 8, 8', 8" ein als Rad 23 ausgeführtes und in der Ebene der Stellscheibe 21 angeordnetes Führungselement befestigt ist, das bei einer Drehung der Stellscheibe 21 auf einer nach innen gerichteten Kontur 24 der Stellscheibe 21 abrollt oder abgleitet und dabei den Arm 8, 8', 8" und das daran befestigte Verschlusselement 10a, 10b, 10c in radialer Richtung gegen einen Federdruck nach innen drückt oder infolge des Federdruckes wieder in radialer Richtung nach außen kommen lässt. An der Kontur 24 der Stellscheibe 21 können Rastpunkte vorgesehen sein, die eine definierte Stellung für die Räder 23 darstellen.

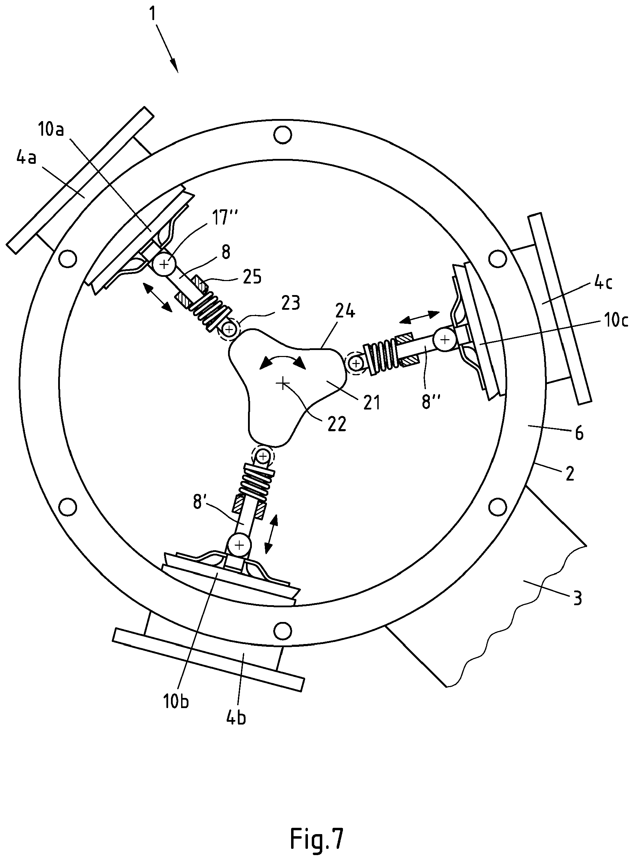

Fig. 7 zeigt schließlich eine siebte Ausgestaltung einer erfindungsgemäßen Vorrichtung 1 in Draufsicht. Die bereits im Zusammenhang mit Fig. 1a bis Fig. 6 beschriebenen Bereiche der Vorrichtung 1 sind in Fig. 7 mit entsprechenden Bezugszeichen versehen. Die siebte Ausgestaltung der Vorrichtung 1 unterscheidet sich von der sechsten Ausgestaltung durch die Ansteuerung der Arme 8, 8', 8". Bei der siebten Ausgestaltung entfällt die gemeinsame, zentral angeordnete Linearführung 20; die Arme 8, 8', 8" sind stattdessen über separate, außen angeordnete Linearführungen 25 beweglich mit dem Gehäuse 2 verbunden. Während jede Linearführung 25 fest mit dem Gehäuse 2 verbunden ist, ist jeder der Arme 8, 8', 8" in Längsrichtung relativ zu der Linearführung 25 verschiebbar (dargestellt durch jeweils einen Pfeil). Auch bei der siebten Ausgestaltung der Vorrichtung 1 ist die lineare Bewegung der Arme 8, 8', 8" an die Rotationsbewegung der Stellscheibe 21 gekoppelt, die wiederum drehbar um eine Drehachse 22 in dem Gehäuse 2 gelagert ist (dargestellt durch einen Pfeil). Auch bei der siebten Ausgestaltung wird dies dadurch umgesetzt, dass an jedem Arm 8, 8', 8" ein als Rad 23 ausgebildetes Führungselement befestigt ist, das bei einer Drehung der Stellscheibe 21 auf der Kontur 24 der Stellscheibe 21 abrollt oder abgleitet. Im Gegensatz zur sechsten Ausgestaltung ist die Kontur 24 bei der siebten Ausgestaltung jedoch nach außen gerichtet, so dass das auf ihr abrollende oder abgleitende Rad 23 den Arm 8, 8', 8" und das daran befestigte Verschlusselement 10a, 10b, 10c in radialer Richtung gegen einen Federdruck nach außen drückt oder es infolge des Federdruckes wieder in radialer Richtung nach innen kommen lässt. Die Stellscheibe 21 weist daher bei der siebten Ausgestaltung Ähnlichkeiten mit einer Nockenwelle auf.

Sowohl bei der sechsten Ausgestaltung (Fig. 6), als auch bei der siebten Ausgestaltung (Fig. 7) der Vorrichtung 1 kann - abgesehen von den Federelementen 11a, 11b, 11c - auf zusätzliche Federn verzichtet werden. Stattdessen können die Stellscheiben 21 derart ausgestaltet sein, dass die Räder 23 beidseitig an einer entsprechend geformten Kontur 24 der Stellscheiben 21 abgleiten und somit radial nach innen und radial nach außen zwangsführt werden können.

Bei allen zuvor dargestellten und beschriebenen Ausgestaltungen können die Einlässe 3 und Auslässe 4a, 4b, 4a', 4b', 4c beliebig vertauscht werden; insbesondere können auch zwei oder mehr Einlässe 3 vorgesehen sein, die auch gleichzeitig geöffnet sein können.

### Bezugszeichenliste:

- 1:: Vorrichtung
- 2:: Gehäuse
- 3:: Einlass
- 4a, 4b, 4a', 4b', 4c:: Auslass
- 5a, 5b, 5a', 5b', 5c:: Flansch (am Einlass oder Auslass)
- 6:: Flansch (am Gehäuse)
- 7a, 7b, 7a', 7b', 7c:: Ende (des Einlasses oder Auslasses)
- 8, 8', 8":: Arm
- 8a, 8b, 8c:: Teile (des Armes)
- 9,9':: Drehachse
- 10a, 10b, 10a', 10b', 10c:: Verschlusselement
- 11a, 11b:: Federelement
- 12a, 12b:: Dichtfläche
- 13:: Fase
- 14', 14":: Kanten
- 15a, 15b:: Kugeloberfläche
- 16:: Durchgangsloch
- 16a, 16a', 16b, 16b':: Abstand
- 17,17', 17":: Gelenk
- 18:: Aktuator
- 19:: Stange
- 20:: Linearführung
- 21:: Stellscheibe
- 22:: Drehachse
- 23:: Rad
- 24:: Kontur (der Stellscheibe)
- 25:: Linearführung
- D:: Durchmesser (des Durchgangsloches)
- Dₘₐₓ:: Maximaldurchmesser (des Verschlusselements)
- Dₘᵢₙ:: Minimaldurchmesser (des Verschlusselements)
- S:: Symmetrieachse

## Patentansprüche

1. Vorrichtung (1) zur Steuerung oder Regelung der Durchflussmenge und/oder Durchflussrichtung von Fluiden, umfassend:
- ein Gehäuse (2) mit wenigstens zwei Einlässen (3) und/oder Auslässen (4a, 4b, 4a', 4b', 4c),
- wenigstens einen Arm (8, 8', 8"), der innerhalb des Gehäuses (2) beweglich angeordnet ist,
- wenigstens ein Verschlusselement (10a, 10b, 10a', 10b', 10c), das innerhalb des Gehäuses (2) angeordnet ist und beweglich mit dem Arm (8, 8', 8") verbunden ist, und
- ein vorgespanntes Federelement (11a, 11b), das zwischen dem Arm (8, 8', 8") und dem Verschlusselement (10a, 10b, 10a', 10b', 10c) angeordnet ist,
- wobei der Arm (8, 8', 8") und das damit verbundene Verschlusselement (10a, 10b, 10a', 10b', 10c) derart angeordnet und miteinander verbunden sind, dass durch das Verschlusselement (10a, 10b, 10a', 10b', 10c) wenigstens ein Einlass (3) und/oder Auslass (4a, 4b, 4a', 4b', 4c) absperrbar ist, und
- wobei das Verschlusselement (10a, 10b, 10a', 10b', 10c) und/oder wenigstens ein Einlass (3) und/oder Auslass (4a, 4b, 4a', 4b', 4c) eine gekrümmte Dichtfläche (12a, 12b) zur Abdichtung der Einlässe (3) und/oder Auslässe (4a, 4b, 4a', 4b', 4c) aufweist,
**dadurch gekennzeichnet, dass**
- das Verschlusselement (10a, 10b, 10a', 10b', 10c) eine kugelförmige Dichtfläche (12a, 12b) aufweist und dass wenigstens ein Einlass (3) und/oder Auslass (4a, 4b, 4a', 4b', 4c) eine umlaufende Kante (14') als Dichtkante aufweist,
oder dass
- das Verschlusselement (10a, 10b, 10a', 10b', 10c) eine umlaufende Kante als Dichtkante aufweist und dass wenigstens ein Einlass (3) und/oder Auslass (4a, 4b, 4a', 4b', 4c) eine kugelförmige Dichtfläche aufweist.

2. Vorrichtung nach Anspruch 1,
**dadurch gekennzeichnet, dass**
der Arm (8, 8', 8") wenigstens ein Durchgangsloch (16) aufweist, durch das zwei Verschlusselemente (10a, 10b, 10a', 10b', 10c), die auf gegenüberliegenden Seiten des Armes (8, 8', 8") angeordnet sind, miteinander verbunden sind.

3. Vorrichtung nach Anspruch 2,
**dadurch gekennzeichnet, dass**
das Durchgangsloch (16) einen Durchmesser (D) aufweist, der größer ist als der Mindestdurchmesser (Dₘᵢₙ), den die beiden miteinander verbundenen Verschlusselemente (10a, 10b, 10a', 10b', 10c) aufweisen.

4. Vorrichtung nach Anspruch 2 oder 3,
**dadurch gekennzeichnet, dass**
das Durchgangsloch (16) einen Durchmesser (D) aufweist, der kleiner ist als der Maximaldurchmesser (Dₘₐₓ), den die beiden miteinander verbundenen Verschlusselemente (10a, 10b, 10a', 10b', 10c) aufweisen.

5. Vorrichtung nach Anspruch 1,
**dadurch gekennzeichnet, dass**
das Verschlusselement (10a, 10b, 10a', 10b', 10c) über ein Kugelgelenk (17") beweglich mit dem Arm (8, 8', 8") verbunden ist.

6. Vorrichtung nach einem der Ansprüche 1 bis 5,
**dadurch gekennzeichnet, dass**
der Arm (8, 8', 8") um eine Drehachse (9, 9') schwenkbar ist, die relativ zu dem Gehäuse (2) eine feste Lage aufweist.

7. Vorrichtung nach einem der Ansprüche 1 bis 6,
**dadurch gekennzeichnet, dass**
die Einlässe (3) und/oder Auslässe (4a, 4b, 4a', 4b', 4c) an ihrem in dem Gehäuse (2) angeordneten Ende (7a, 7b, 7a', 7b', 7c) kreisförmig ausgebildet sind.

8. Vorrichtung nach einem der Ansprüche 1 bis 7,
**dadurch gekennzeichnet, dass**
der Arm (8, 8', 8") wenigstens zwei beweglich miteinander verbundene Teile (8a, 8b, 8c) umfasst, wobei der erste Teil (8a) um eine Drehachse (9, 9') schwenkbar ist, die relativ zu dem Gehäuse (2) eine feste Lage aufweist, und wobei der zweite Teil (8b) und jeder weitere Teil (8c) um wenigstens eine Drehachse schwenkbar ist, die relativ zu dem benachbarten Teil (8a, 8b, 8c) eine feste Lage aufweist.

9. Vorrichtung nach Anspruch 8,
**dadurch gekennzeichnet, dass**
wenigstens ein Verschlusselement (10a, 10b, 10a', 10b', 10c) beweglich mit dem ersten Teil (8a) des Armes verbunden ist und/oder dass wenigstens ein Verschlusselement (10a, 10b, 10a', 10b', 10c) beweglich mit dem zweiten Teil (8b) und/oder jedem weiteren Teil (8c) des Armes verbunden ist.

10. Vorrichtung nach einem der Ansprüche 1 bis 9,
**gekennzeichnet durch**
einen Aktuator (18) zur Bewegung des Armes (8, 8', 8"), wobei der Aktuator (18) außerhalb des Gehäuses (2) angeordnet ist.

11. Vorrichtung nach Anspruch 10,
**dadurch gekennzeichnet, dass**
der Aktuator (18) mechanisch mit dem Arm (8, 8', 8") verbunden ist.

12. Vorrichtung nach Anspruch 10,
**dadurch gekennzeichnet, dass**
der Aktuator (18) berührungslos, insbesondere magnetisch mit dem Arm (8, 8', 8") verkoppelt ist.

13. Vorrichtung nach einem der Ansprüche 1 bis 12,
**dadurch gekennzeichnet, dass**
mehrere Arme (8, 8', 8") über eine gemeinsame Linearführung (20) oder über jeweils eine separate Linearführung (25) beweglich mit dem Gehäuse (2) verbunden sind.

14. Vorrichtung nach Anspruch 13,
**gekennzeichnet durch**
wenigstens eine drehbar mit dem Gehäuse (2) verbundene Stellscheibe (21) mit wenigstens einer nach außen oder nach innen gerichteten Kontur (24) zur radialen Verschiebung der Arme (8, 8', 8").

15. Verwendung einer Vorrichtung (1) nach einem der Ansprüche 1 bis 14 zur Steuerung oder Regelung der Durchflussmenge und/oder Durchflussrichtung von Fluiden bei der Sterilisation von Lebensmittelverpackungen und/oder deren Füllgut.

## Claims

1. Apparatus (1) to control or regulate the flow rate and/or flow direction of fluids, comprising:
- a housing (2) with at least two inlets (3) and/or outlets (4a, 4b, 4a', 4b', 4c),
- at least one arm (8, 8', 8"), which is arranged inside the housing (2) so as to be movable,
- at least one closure element (10a, 10b, 10a', 10b', 10c) which is arranged inside the housing (2) and is movably connected to the arm (8, 8', 8"), and
- a pre-tensioned spring element (11a, 11b) which is arranged between the arm (8, 8', 8") and the closure element (10a, 10b, 10a', 10b', 10c),
- wherein the arm (8, 8', 8") and the closure element (10a, 10b, 10a', 10b', 10c) connected thereto are arranged and connected to one another such that at least one inlet (3) and/or outlet (4a, 4b, 4a', 4b', 4c) can be shut off by the closure element (10a, 10b, 10a', 10b', 10c), and
- wherein the closure element (10a, 10b, 10a', 10b', 10c) and/or at least one inlet (3) and/or outlet (4a, 4b, 4a', 4b', 4c) has a curved sealing surface (12a, 12b) to seal the inlets (3) and/or outlets (4a, 4b, 4a', 4b', 4c),
**characterised in that**
- the closure element (10a, 10b, 10a', 10b', 10c) has a spherical sealing surface (12, 12b) and **in that** at least one inlet (3) and/or outlet (4a, 4b, 4a', 4b', 4c) has a circumferential edge (14') as the sealing edge,
or **in that**
- the closure element (10a, 10b, 10a', 10b', 10c) has a circumferential edge as the sealing edge and **in that** at least one inlet (3) and/or outlet (4a, 4b, 4a', 4b', 4c) has a spherical sealing surface.

2. Apparatus according to claim 1, **characterised in that** the arm (8, 8', 8") has at least one through-hole (16) through which two closure elements (10a, 10b, 10a', 10b', 10c), which are arranged on opposing sides of the arm (8, 8', 8"), are connected to one another.

3. Apparatus according to claim 2, **characterised in that** the through-hole (16) has a diameter (D), which is larger than the minimum diameter (Dₘᵢₙ) of the two closure elements (10a, 10b, 10a', 10b', 10c) connected to one another.

4. Apparatus according to claim 2 or 3, **characterised in that** the through-hole (16) has a diameter (D) which is smaller than the maximum diameter (Dₘₐₓ) of the two closure elements (10a, 10b, 10a', 10b', 10c) connected to one another.

5. Apparatus according to claim 1, **characterised in that** the closure element (10a, 10b, 10a', 10b', 10c) is movably connected to the arm (8, 8', 8") via a ball joint (17").

6. Apparatus according to any one of claims 1 to 5, **characterised in that** the arm (8, 8', 8") is pivotable about a rotary axis (9, 9') which has a fixed position relative to the housing (2).

7. Apparatus according to any one of claims 1 to 6, **characterised in that** the inlets (3) and/or outlets (4a, 4b, 4a', 4b', 4c) are designed in a circular shape at their ends (7a, 7b, 7a', 7b', 7c) arranged in the housing (2).

8. Apparatus according to any one of claims 1 to 7, **characterised in that** the arm (8, 8', 8") comprises at least two parts (8a, 8b, 8c) movably connected to one another, wherein the first part (8a) is pivotable about a rotary axis (9, 9') which has a fixed position relative to the housing (2) and wherein the second part (8b) and each further part (8c) is pivotable about at least one rotary axis which has a fixed position relative to the adjacent part (8a, 8b, 8c).

9. Apparatus according to claim 8, **characterised in that** at least one closure element (10a, 10b, 10a', 10b', 10c) is movably connected to the first part (8a) of the arm and/or **in that** at least one closure element (10a, 10b, 10a', 10b', 10c) is movably connected to the second part (8b) and/or each further part (8c) of the arm.

10. Apparatus according to any one of claims 1 to 9, **characterised by** an actuator (18) to move the arm (8, 8', 8"), wherein the actuator (18) is arranged outside of the housing (2).

11. Apparatus according to claim 10, **characterised in that** the actuator (18) is mechanically connected to the arm (8, 8', 8").

12. Apparatus according to claim 10, **characterised in that** the actuator (18) is contactlessly, in particular magnetically coupled to the arm (8, 8', 8").

13. Apparatus according to any one of claims 1 to 12, **characterised in that** a plurality of arms (8, 8', 8") are movably connected to the housing (2) via a common linear guide (20) or via in each case a separate linear guide (25).

14. Apparatus according to claim 13, **characterised by** at least one adjustment disc (21) rotatably connected to the housing (2) having at least one contour (24) directed outwardly or inwardly for the radial displacement of the arms (8, 8', 8").

15. Use of an apparatus (1) according to any one of claims 1 to 14 to control or regulate the flow rate and/or flow direction of fluids when sterilising foodstuff packages and/or their filling product.

## Revendications

1. Dispositif (1) de commande ou de régulation du débit et/ou du sens d'écoulement de fluides, comportant :
- un boîtier (2) qui comprend au moins deux entrées (3) et/ou sorties (4a, 4b, 4a', 4b', 4c),
- au moins un bras (8, 8', 8") qui est disposé mobile à l'intérieur du boîtier (2),
- au moins un élément d'obturation (10a, 10b, 10a', 10b', 10c) qui est disposé à l'intérieur du boîtier (2) et qui est relié de manière mobile au bras (8, 8', 8"), et
- un élément ressort (11a, 11b) précontraint qui est disposé entre le bras (8, 8', 8") et l'élément d'obturation (10a, 10b, 10a', 10b', 10c),
- le bras (8, 8', 8") et l'élément d'obturation (10a, 10b, 10a', 10b', 10c) qui y est relié étant disposés et reliés l'un à l'autre de telle sorte qu'au moins une entrée (3) et/ou une sortie (4a, 4b, 4a', 4b', 4c) peut être fermée par l'élément d'obturation (10a, 10b, 10a', 10b', 10c), et
- l'élément d'obturation (10a, 10b, 10a', 10b', 10c) et/ou au moins une entrée (3) et/ou une sortie (4a, 4b, 4a', 4b', 4c) possédant une surface d'étanchéité (12a, 12b) curviligne destinée à étanchéifier les entrées (3) et/ou les sorties (4a, 4b, 4a', 4b', 4c),
**caractérisé en ce que**
- l'élément d'obturation (10a, 10b, 10a', 10b', 10c) possède une surface d'étanchéité (12a, 12b) de forme sphérique et **en ce qu'**au moins une entrée (3) et/ou une sortie (4a, 4b, 4a', 4b', 4c) possède une arête périphérique (14') en tant qu'arête d'étanchéité,
ou **en ce que**
- l'élément d'obturation (10a, 10b, 10a', 10b', 10c) possède une arête périphérique en tant qu'arête d'étanchéité et **en ce qu'**au moins une entrée (3) et/ou une sortie (4a, 4b, 4a', 4b', 4c) possède une surface d'étanchéité de forme sphérique.

2. Dispositif selon la revendication 1, **caractérisé en ce que** le bras (8, 8', 8") possède au moins un trou traversant (16) par lequel sont reliés l'un à l'autre deux éléments d'obturation (10a, 10b, 10a', 10b', 10c) qui sont disposés sur des côtés opposés du bras (8, 8', 8").

3. Dispositif selon la revendication 2, **caractérisé en ce que** le trou traversant (16) présente un diamètre (D) qui est supérieur au diamètre minimal (Dₘᵢₙ) que présentent les deux éléments d'obturation (10a, 10b, 10a', 10b', 10c) reliés l'un à l'autre.

4. Dispositif selon la revendication 2 ou 3, **caractérisé en ce que** le trou traversant (16) présente un diamètre (D) qui est inférieur au diamètre maximal (Dₘₐₓ) que présentent les deux éléments d'obturation (10a, 10b, 10a', 10b', 10c) reliés l'un à l'autre.

5. Dispositif selon la revendication 1, **caractérisé en ce que** l'élément d'obturation (10a, 10b, 10a', 10b', 10c) est relié de manière mobile au bras (8, 8', 8") par le biais d'un joint à rotule (17").

6. Dispositif selon l'une des revendications 1 à 5, **caractérisé en ce que** le bras (8, 8', 8") peut pivoter autour d'un axe de rotation (9, 9') qui présente une position fixe par rapport au boîtier (2).

7. Dispositif selon l'une des revendications 1 à 6, **caractérisé en ce que** les entrées (3) et/ou les sorties (4a, 4b, 4a', 4b', 4c) sont de configuration circulaire au niveau de leur extrémité (7a, 7b, 7a', 7b', 7c) disposée dans le boîtier (2).

8. Dispositif selon l'une des revendications 1 à 7, **caractérisé en ce que** le bras (8, 8', 8") comporte au moins deux parties (8a, 8b, 8c) reliées de manière mobile l'une à l'autre, la première partie (8a) pouvant pivoter autour d'un axe de rotation (9, 9') qui présente une position fixe par rapport au boîtier (2), et la deuxième partie (8b) ainsi que chaque partie supplémentaire (8c) pouvant pivoter autour d'au moins un axe de rotation qui présente une position fixe par rapport à la partie (8a, 8b, 8c) voisine.

9. Dispositif selon la revendication 8, **caractérisé en ce qu'**au moins un l'élément d'obturation (10a, 10b, 10a', 10b', 10c) est relié de manière mobile à la première partie du bras (8a) et/ou **en ce qu'**au moins un l'élément d'obturation (10a, 10b, 10a', 10b', 10c) est relié de manière mobile à la deuxième partie (8b) et/ou à chaque partie supplémentaire (8c) du bras.

10. Dispositif selon l'une des revendications 1 à 9, **caractérisé par** un actionneur (18) destiné à déplacer le bras (8, 8', 8"), l'actionneur (18) étant disposé à l'extérieur du boîtier (2).

11. Dispositif selon la revendication 10, **caractérisé en ce que** l'actionneur (18) est relié mécaniquement au bras (8, 8', 8").

12. Dispositif selon la revendication 10, **caractérisé en ce que** l'actionneur (18) est couplé sans contact avec le bras (8, 8', 8"), notamment magnétiquement.

13. Dispositif selon l'une des revendications 1 à 12, **caractérisé en ce que** plusieurs bras (8, 8', 8") sont reliés de manière mobile au boîtier (2) par le biais d'un guide linéaire (20) commun ou par le biais d'un guide linéaire (25) respectivement séparé.

14. Dispositif selon la revendication 13, **caractérisé par** au moins un disque de réglage (21) relié de manière rotative au boîtier (2), comprenant au moins un contour (24) dirigé vers l'extérieur ou vers l'intérieur servant au coulissement radial des bras (8, 8', 8").

15. Utilisation d'un dispositif (1) selon l'une des revendications 1 à 14 pour commander ou réguler le débit et/ou le sens d'écoulement de fluides lors de la stérilisation d'emballages de denrées alimentaires et/ou de leur charge.
